# EUROPÄISCHE PATENTSCHRIFT

(11) **EP 3 333 196 B1**
(45) Veröffentlichungstag und Bekanntmachung des Hinweises auf die Patenterteilung: **13.05.2020**
(21) Anmeldenummer: 16203271.8
(22) Anmeldetag: 09.12.2016
(51) Int. Cl.: C08C 19/02, C08F 236/12

(54) **HYDRIERTE NITRIL-DIEN-CARBONSÄUREESTER-COPOLYMERE**
HYDROGENATED NITRILE DIENE CARBOXYLIC ACID ESTER COPOLYMERS
COPOLYMÈRE D'ESTER NITRILE-DIÈNE D'ACIDE CARBOXYLIQUE HYDROGÉNÉ

(43) Veröffentlichungstag der Anmeldung: 13.06.2018
(73) Patentinhaber: ARLANXEO Deutschland GmbH, 41540 Dormagen (DE)
(72) Erfinder: Salem, Hiyam, 50733 Köln (DE); Schneiders, Karola, 51465 Bergisch Gladbach (DE); Lieber, Susanna, 67663 Kaiserslautern (DE)

(56) Entgegenhaltungen:
- EP-A1- 0 795 580
- EP-A1- 2 857 447
- EP-A1- 2 857 448
- WO-A1-2016/174203
- WO-A2-02/02657

## Beschreibung

Die vorliegende Erfindung betrifft hydrierte Nitril-Dien-Carbonsäureester-Copolymere, deren Herstellung, vulkanisierbare Mischungen enthaltend hydrierte Nitril-Dien-Carbonsäureester-Copolymere und deren Herstellung, sowie Vulkanisate, basierend auf hydrierten Nitril-Dien-Carbonsäureester-Copolymeren und deren Verwendung in Riemen.

Unter Nitril-Butadien-Copolymer (Nitrilkautschuk, abgekürzt auch als "**NBR**" bezeichnet) werden im Rahmen dieser Anmeldung Kautschuke verstanden, bei denen es sich um Co-, Ter- oder Quartärpolymere aus mindestens einem α,β-ethylenisch ungesättigten Nitril, mindestens einem konjugierten Dien und gegebenenfalls einem oder mehreren weiteren copolymerisierbaren Monomeren handelt.

Unter hydriertem Nitril-Butadien-Copolymer ("**HNBR**") werden entsprechende Co-, Ter- oder Quartärpolymere verstanden, bei denen die Summe der C=C-Doppelbindungen der einpolymerisierten Dien-Einheiten ganz oder teilweise hydriert ist.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Riemen, Dichtungen, Schläuchen und Dämpfungselementen im Automobilsektor, ferner für Statoren, Bohrlochdichtungen und Ventildichtungen im Bereich der Ölförderung, sowie auch für zahlreiche Teile der Elektroindustrie, des Maschinen- und Schiffsbaus. Für viele Anwendungen ist es entscheidend, dass das Vulkanisat auf Basis von HNBR eine niedrige Glasübergangstemperatur (Tg) aufweist, damit die Funktionalität des Vulkanisats auch bei geringen Temperaturen gewährleistet ist. Zusätzlich ist es auch erforderlich, dass das Vulkanisat in Kontakt mit bspw. Öl oder Kraftstoffen, eine möglichst geringe Quellung aufweist, da ansonsten das Vulkanisat an Volumen zunimmt und nicht mehr einsatzfähig ist.

Kommerziell erhältlich sind eine Vielzahl unterschiedlicher HNBR-Typen, die sich je nach Anwendungsbereich durch unterschiedliche Monomere, Molekulargewichte und Polydispersitäten sowie damit einhergehend durch unterschiedliche mechanische und physikalische Eigenschaften auszeichnen. Neben den Standardtypen werden vor allem Spezialtypen, die sich durch Gehalte spezieller **Termonomere** oder besondere Funktionalisierungen auszeichnen, zunehmend nachgefragt.

Als spezielle Termonomere sind beispielsweise α,β-ethylenisch ungesättigte **Carbonsäuren** bekannt (u.a. Acrylsäure und Methacrylsäure). Terpolymere mit diesen Termonomeren werden zusammengefasst als HXNBR wobei das "X" für die Säuregruppe steht. Darunter fallen beispielsweise Monocarbonsäuren, Dicarbonsäuren und Dicarbonsäuremonoester (u.a. Monomethylmaleat oder Monobutylmaleat).

Ebenfalls bekannt sind Terpolymere mit α,β-ethylenisch ungesättigten **Carbonsäureestereinheiten** (u.a. Monocarbonsäureester wie Methylacrylat und Butylacrylat oder Dicarbonsäuremonoester wie Monobutylmaleat).

EP-A-1852447 offenbart einen hochgesättigten nitrilgruppenhaltigen Terpolymer-Kautschuk mit 10 bis 40 Gew.-% α,β-ethylenisch ungesättigten Nitrileinheiten, 10 bis 60 Gew.-% α,β-ethylenisch ungesättigte **Carbonsäureestereinheiten,** wie beispielsweise Butylacrylat, und 20 bis 70 Gew.-% einer konjugierten Dieneinheit, welches ein Vulkanisat mit ausgewogenen Eigenschaften aufweist. Die explizit offenbarten Beispiele weisen HNBR Terpolymer mit Acrylnitrileinheiten im Bereich von 5 bis 45 Gew-% (6 bis 50 Mol.-%) Acrylnitrileinheiten, 40 bis 75 Gew.-% (43 bis 77 Mol-%) Butadien-Einheiten und 5 bis 38 Gew.-% (2 bis 20 Mol.-%) Butylacrylateinheiten auf mit einem TR 10 bis hinunter auf - 41 °C. Zum Quellverhalten der Terpolymere in IRM 903 findet sich keine Offenbarung. Polyethylenglycolacrylate (PEG-Acrylate) sind nicht explizit als α,β-ethylenisch ungesättigte Carbonsäureestereinheiten offenbart.

EP-A-1247835 offenbart ein nitrilgruppenhaltiges hochgesättigtes Copolymer enthaltend (a) 10 bis 40 Gew.-% α,β-ethylenisch ungesättigte Nitrileinheiten, (b) 10 bis 60 Gew.-% α,β-ethylenisch ungesättigte **Carbonsäureestereinheiten,** (c) 0,01 bis 21 Gew.-% konjugierter Dieneinheiten und 14 bis 69,99 Gew.-% gesättigter konjugierter Dieneinheiten, wobei die Summe der Monomereinheiten (c) und (d) 20 bis 70 Gew.-% beträgt und das Verhältnis der Monomereinheiten (d)/[(c)+(d)] wenigstens 70 Gew.-% beträgt und die Differenz zwischen der extrapolierten Anfangstemperatur des Glasübergangs (Tig) und der extrapolierten Endtemperatur des Glasübergangs (Teg) nicht größer als 10°C ist. Die explizit offenbarten Beispiele weisen HNBR Terpolymere mit 20 Gew.-% (23 bis 29 Mol-%) Acrylnitril, 30 bis 60 Gew.-% (42 bis 68 Mol-%) Butadien und 20 bis 50 Gew.-% (10 bis 30 Mol-%) Butylacrylat auf. Die vulkanisierten Produkte der Copolymer-Kautschuke weisen gute Kältebeständigkeit, Ölbeständigkeit und gute dynamische Eigenschaften auf. Explizite Ausführungsbeispiele von HNBR Terpolymeren mit 15 bis 49,9 Gew.-% PEG-Acrylateinheiten sind nicht offenbart.

Weiterhin ist in EP-A-1243602 ein Terpolymer offenbart enthaltend (a) 0 bis 20 Gew.-% 1,3-Butadieneinheiten, (b) 0 bis 50 Gew.-% gesättigte 1,3-Butadieneinheiten, (c) 40 bis 50 Gew.-% α,β-ethylenisch ungesättigte Nitrileinheiten, und (d) 10 bis 35 Gew.-% und zumindest 8 Mol-% **anderer Monomereinheiten**, wobei die Summe der 1,3-Butadieneinheiten (a) und der gesättigten 1,3-Butadieneinheiten (b) im Bereich von 30 bis 50 Gew.-% ist. Bei der anderen Monomereinheit kann es sich u.a. um ungesättigte **Carbonsäureester** handeln. Dieser nitrilgruppenhaltige hochgesättigte Copolymer-Kautschuk weist im vulkanisierten Produkt gute Ölbeständigkeit auf. Explizite HNBR Terpolymere mit hydrierten PEG-Acrylateinheiten sind nicht offenbart. Explizite Beispiele finden sich lediglich mit Butylacrylat.

Weiterhin bekannt sind Nitril-Dien-Copolymere mit **PEG-Acrylateinheiten**.

EP-A-2868677 offenbart ein nitrilgruppenhaltiges Copolymer mit 1 bis 9 Gew.-% **Monocarbonsäuremonoestereinheiten** mit einer Glastemperatur von weniger als -20 °C und einer Ölquellung kleiner als 20 %. Darin werden explizit Terpolymere mit 4,8 Gew.-% und 7,7 Gew.-% **Methoxyethylacrylat**, d.h. PEG-1-Acrylat, bzw. mit 4,1 Gew.-% PEG-5-Methacrylat. EP-A-2868277 offenbart keine Copolymere mit mindestens 15 Gew.-% PEG-Acrylateinheiten mit zwei oder mehr Ethylenglycol-Wiederholungseinheiten.

EP-A-2868676 offenbart ein nitrilgruppenhaltiges Copolymer- mit 1 bis 9 Gew.-% α,β-ethylenisch ungesättigten carbonylgruppenhaltigen Monomereinheiten. Als explizite Beispiele werden hydrierte Terpolymere mit PEG-11-Monomeren offenbart. EP-A-2868276 offenbart jedoch keine Copolymere mit mindestens 15 Gew.-% PEG Acrylat mit 2 bis 12 Ethylenglycol-Wiederholungseinheiten.

Zur exakteren Einstellung der gewünschten Polymereigenschaften reichen häufig Terpolymere nicht mehr aus. **Quartärpolymere**, d.h. Polymere aus vier Monomereinheiten, finden zunehmend Verwendung. Bekannt sind Quartärpolymere mit α,β-ethylenisch ungesättigten Carbonsäuren und α,β-ethylenisch ungesättigten Carbonsäureestern.

EP-A-2392599 offenbart ein zumindest teilweise hydriertes Nitril-Butadien-Copolymer enthaltend 5 bis 60 Gew.-% α,β-ethylenisch ungesättigte Nitrileinheiten, 20 bis 83,9 Gew.-% konjugierte Dieneinheiten, 0,1 bis 20 Gew.-% **Dicarbonsäuremonoestereinheiten**, 11 bis 50 Gew.-% **Alkoxyalkyl(meth)acrylsäureestereinheiten** mit 2 bis 8 Kohlenstoffatomen. In Tabelle 2 werden unter anderem Quartärpolymere beschrieben mit einem Gehalt von 21,3 bzw. 24,8 Gew.-% (27 bis 30 Mol.-%) Acrylnitril, 46,6 bzw. 47,3 Gew.-% (57 Mol-%) Butadien, 4,5 bis 5 Gew.-% (2 Mol.-%) Mono-n-butyl-maleat und 23,0 bzw. 27,1 Gew.-% (11 bis 14 Mol.-%) Methoxyethylacrylat. Die Vulkanisate, die aus diesen hydrierten Nitril-Butadien-Copolymeren hergestellt werden, weisen gute TR10 Werte auf. Es wird kein Hinweis auf das Quellverhalten in IRM 903 oder die Glasübergangstemperatur Tg offenbart. HNBR-Terpolymere mit Polyethylenglycolacrylateinheiten sind nicht explizit offenbart. Ebenso sind keine Ter- oder Quartärpolymere mit weniger als 20 Gew.-% Nitrileinheiten offenbart.

JP-A-2012-031311 beschreibt einen nitrilgruppenhaltigen, hochgesättigten Copolymer-Kautschuk enthaltend (a) 10,0 bis 40,0 Gew.-% α,β-ethylenisch ungesättigte Nitrileinheiten, (b) 5,5 bis 10,0 Gew.-% α,β-ethylenisch ungesättigte **Dicarbonsäuremonoestereinheiten**, (c) 11,0 bis 30,0 Gew.-% **Alkoxyalkyl(meth)acrylateinheiten** mit Alkoxyalkyl-Gruppen mit 2 bis 8 Kohlenstoffatomen, und (d) 20,0 bis 73,5 Gew.-% konjugierte Dieneinheiten, wobei zumindest ein Teil der konjugierten Dieneinheiten hydriert ist. HNBR Terpolymere mit Polyethylenglycolacrylateinheiten sind nicht explizit offenbart.

WO-A-2015/146650 offenbart nitrilgruppenhaltige, hochgesättigte Copolymere enthaltend weniger als 30 Gew.-% Nitrileinheiten, (b) konjugierte Dieneinheiten, (c) α,β-ethylenisch ungesättigte Dicarbonsäuremonoestereinheiten und (d) Methoxyethylacrylat. Die Beispiele offenbaren explizit ein Quartärpolymer enthaltend 24 Gew.-% Acrylnitrileinheiten, 46 Gew.-% Butadieneinheiten, 23 Gew.-% Methoxyethylacrylat und 7 Gew.-% Mono-n-butylmaleat. HNBR Quartärpolymere mit Polyethylenglycolacrylateinheiten sind nicht explizit offenbart.

WO-A-2016/059855 offenbart Copolymere enthaltend (a) 0,1 bis 15 Gew.-% α,β-ethylenisch ungesättigte Nitrileinheiten, (b) 1 bis 10 Gew.-% α,β-ethylenisch ungesättigte **Dicarbonsäuremonoestereinheiten**, (c) 40 bis 75 Gew.-% α,β-ethylenisch ungesättigte **Monocarbonsäureestereinheiten** und (d) 20 bis 58,9 Gew.-% Dieneinheiten. HNBR Terpolymere mit Polyethylenglycolacrylateinheiten sind nicht explizit offenbart.

Die Wahl des Monomers bzw. der Monomere sowie die Menge der eingesetzten Monomere hat entscheidenden Einfluss auf die Polymereigenschaften und ist somit nicht ohne Weiteres vorhersagbar.

Die bisher bekannten hydrierten Nitril-Butadien-Carbonsäureester-Copolymere, welche neben Nitrileinheiten und Dieneinheiten als Termonomereinheiten ausschließlich Monocarbonsäuren, Carbonsäureester wie Butylacrylat oder Monobutylmaleat, PEG-1-Acrylat oder geringe Menge an PEG-Acrylat enthalten, erfüllen die Anforderung einer niedrigen Glasübergangstemperatur von **weniger als -40 °C** und einer Quellung von **51** % **oder weniger** im Vulkanisat nicht zufriedenstellend.

Demgemäß lag eine **Aufgabe** der vorliegenden Erfindung in der Bereitstellung eines hydrierten Nitril-Dien-Copolymers, welches in einem Vulkanisat zu einer verbesserten Glasübergangstemperatur von weniger als -40 °C, bevorzugt von -44 °C oder weniger führt und gleichzeitig zufriedenstellende Quellungseigenschaften von 51 % oder weniger aufweist. Eine weitere Aufgabe bestand darin, HNBR-Copolymere bereitzustellen, die ganz besonders wenig Gehalt an Gel. Außerdem war es eine weitere Aufgabe, dass die dynamischen und mechanischen **Eigenschaften** des bereitgestellten HNBR-Copolymers ähnlich **ausgewogen** sind wie in bereits bekannten HNBR-Polymeren. Aufgabe war es außerdem ein HNBR-Copolymer bereitzustellen, bei dessen Herstellung eine geringe Menge umwelt- und **gesundheitsgefährdender** Substanzen eingesetzt wird.

Die **Lösung** der Aufgabe und Gegenstand der vorliegenden Erfindung ist nun ein hydriertes Nitril-Dien-Carbonsäureester-Copolymer, enthaltend
(a) **0,1 bis 20 Gew.-%,** bevorzugt 1 bis 19 Gew.-% und besonders bevorzugt 8 bis 18 Gew.-% zumindest einer α,β-ethylenisch ungesättigten **Nitrileinheit,**
(b) **15 bis 74,9 Gew.-%,** bevorzugt 21 bis 73 Gew.-% und besonders bevorzugt 27 bis 65 Gew.-% zumindest einer konjugierten **Dieneinheit** und
(c) **25 bis 65 Gew.-%,** bevorzugt 26 bis 60 Gew.-% und besonders bevorzugt 27 bis 55 Gew.-% zumindest einer **α,β-ethylenisch ungesättigten Carbonsäureestereinheit,**
wobei **zumindest 15 Gew.-%,** bevorzugt zumindest 20 Gew.-% der α,β-ethylenisch ungesättigten Carbonsäureestereinheiten (c) bezogen auf die Gesamtmenge aller Monomereinheiten von 100 Gew.-%, von einem **PEG-Acrylat (d) der allgemeinen Formel (I)** 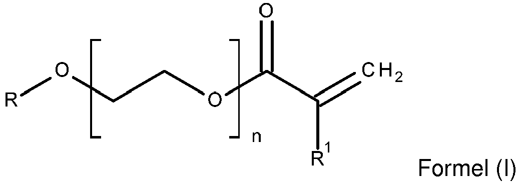 abgeleitet sind, wobei
- R: gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
- n: gleich 2 bis 12, bevorzugt 2 bis 8, besonders bevorzugt 2 bis 5 und ganz besonders bevorzugt 2 oder 3 ist und
- R¹: gleich Wasserstoff oder CH₃- ist.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, Restedefinitionen bzw. Verfahrensparameter umfasst.

Der Begriff "**Copolymer**" umfasst Polymere mit mehr als einer Monomereinheit.

In einer Ausführungsform der Erfindung ist das Copolymer beispielsweise ausschließlich abgeleitet von den drei Monomertypen (a), (b) und (d) und ist daher ein **Terpolymer.** Somit sind alle α,β-ethylenisch ungesättigten Carbonsäureestereinheiten (c) des hydrierten Nitril-Dien-Carbonsäureester-Copolymers PEG-Acrylateinheiten (d) der allgemeinen Formel (I).

Ebenso umfasst vom Begriff Copolymer sind beispielsweise weiterhin **Quartärpolymere**, abgeleitet von den drei Monomertypen (a), (b) und (d) und einer weiteren α,β-ethylenisch ungesättigten Carbonsäureestereinheit (c), die sich von der PEG-Acrylateinheit (d) unterscheidet.

Bei dem Begriff "**Nitril-Dien-Carbonsäureester-Copolymer**" handelt es sich im Rahmen dieser Erfindung um ein Copolymer enthaltend zumindest eine α,β-ethylenisch ungesättigte Nitrileinheit, zumindest eine konjugierte Dieneinheit und zumindest eine α,β-ethylenisch ungesättigten Carbonsäureestereinheit. Der Begriff umfasst somit auch Copolymere mit zwei oder mehr α,β-ethylenisch ungesättigte Nitrilmonomereinheiten, zwei oder mehr konjugierten Dienmonomereinheiten und zwei oder mehr α,β-ethylenisch ungesättigten Carbonsäureestereinheiten.

Der Begriff "**hydriert**" beschreibt, dass der Grad der Hydrierung der Butadieneinheiten im hydrierten Nitril-Dien-Carbonsäureester-Copolymer 50% bis 100%, bevorzugt zu 90 % bis 100 %, besonders bevorzugt zu 95 % bis 100 % und ganz besonders bevorzugt zu 99 % bis 100 % beträgt.

### α,β-ethylenisch ungesättigtes Nitril

Als **α,β-ethylenisch ungesättigtes Nitril,** das die **α,β-ethylenisch ungesättigten Nitrileinheiten (a)** bildet, kann jedes bekannte α,β-ethylenisch ungesättigte Nitril eingesetzt werden. Bevorzugt sind (C₃-C₅)-α,β-ethylenisch ungesättigte Nitrile wie Acrylnitril, α-Haloacrylnitril wie beispielsweise α-Chloracrylnitril und α-Bromacrylnitril, α-Alkylacrylnitril wie beispielsweise Methacrylnitril, Ethacrylnitril oder Mischungen aus zwei oder mehr α,β-ethylenisch ungesättigten Nitrilen. Besonders bevorzugt sind Acrylnitril, Methacrylnitril, Ethacrylnitril oder Mischungen daraus. Ganz besonders bevorzugt ist Acrylnitril.

Die **Menge an α,β-ethylenisch ungesättigten Nitrileinheiten (a)** liegt typischerweise im Bereich von 0,1 bis 20 Gew.-%, bevorzugt 1 bis 19 Gew.-%, besonders bevorzugt von 8 bis 18 Gew.-% bezogen auf die Gesamtmenge von 100 Gew.-% aller Monomereinheiten des hydrierten Nitril-Dien-Carbonsäureester-Copolymers.

### Konjugiertes Dien

Das **konjugierte Dien,** das die **konjugierten Dieneinheiten (b)** bildet, kann von jeder Natur sein, insbesondere konjugierte C₄-C₁₂-Diene. Besonders bevorzugt sind 1,3-Butadien, Isopren, 2,3-Dimethylbutadien, 1,3-Pentadien (Piperylen) oder Gemische daraus. Insbesondere bevorzugt sind 1,3-Butadien und Isopren oder Gemische daraus. Ganz besonders bevorzugt ist 1,3-Butadien.

Die **Menge an konjugiertem Dien** liegt typischerweise im Bereich von 15 bis 74,9 Gew.-%, bevorzugt 21 bis 73 Gew.-% und besonders bevorzugt 27 bis 65 Gew.-%, bezogen auf die Gesamtmenge von 100 Gew.-% aller Monomereinheiten des hydrierten Nitril-Dien-Carbonsäureester-Copolymers.

### α,β-ethylenisch ungesättigte Carbonsäureester

Zusätzlich zu den α,β-ethylenisch ungesättigten Nitrileinheiten und den konjugierten Dieneinheiten enthält das hydrierte Nitril-Dien-Carbonsäureester-Copolymer als dritte Einheit zumindest eine **α,β-ethylenisch ungesättigten Carbonsäureestereinheit (c)**, wobei zumindest 15 Gew.-%, bevorzugt zumindest 20 Gew.-% der α,β-ethylenisch ungesättigten Carbonsäureestereinheit (c) bezogen auf die Gesamtmenge aller Monomereinheiten von 100 Gew.-% von einem **PEG-Acrylat (d)** der allgemeinen Formel (I) 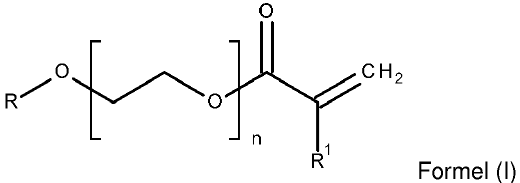 abgeleitet sind, wobei
- R: gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
- n: gleich 2 bis 12, bevorzugt 2 bis 8, besonders bevorzugt 2 bis 5 und ganz besonders bevorzugt 2 oder 3 ist und
- R¹: gleich Wasserstoff oder CH₃- ist.

Der Begriff "**(Meth)acrylat**" steht im Rahmen dieser Erfindung für "Acrylat" und "Methacrylat". Wenn der Rest R¹ der allgemeinen Formel (I) CH₃- ist, so handelt es sich um ein Methacrylat.

Der Begriff "**Polyethylenglycol**" bzw. die Abkürzung "PEG" steht im Rahmen dieser Erfindung für Ethylenglycol-Abschnitte mit zwei Ethylenglycol-Wiederholungseinheit (PEG-2; n gleich 2) bis 12 Ethylenglycol-Wiederholungeinheiten (PEG-2 bis PEG-12; n gleich 2 bis 12).

Der Begriff "**PEG-Acrylat**" wird auch mit PEG-X-(M)A abgekürzt, wobei "X" für die Anzahl an Ethylenglycol-Wiederholungseinheiten steht, "MA" für Methacrylat steht und "A" für Acrylat steht.

Acrylateinheiten, abgeleitet von PEG-Acrylaten der allgemeinen Formel (I) werden im Rahmen dieser Erfindung als "**PEG-Acrylateinheit**" (d) bezeichnet.

Bevorzugte PEG-Acrylateinheiten (d) sind abgeleitet von den PEG-Acrylaten der nachfolgenden Formeln Nr. 1 bis Nr. 8, wobei n gleich 2, 3, 4, 5, 6, 7, 8, 9, 10, 11 oder 12, bevorzugt 2, 3, 4, 5, 6, 7 oder 8, besonders bevorzugt 2, 3, 4 oder 5 und ganz besonders bevorzugt 2 oder 3 ist:

| | |
|---|---|
| Ethoxypolyethylenglycolacrylat | 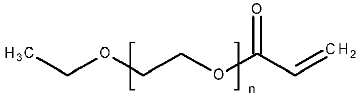 |
| (Formel Nr. 1) | |
| Ethoxypolyethylenglycolmethacrylat | 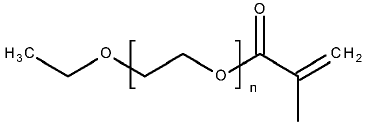 |
| (Formel Nr. 2) | |
| Propoxypolyethylenglycolacrylat | 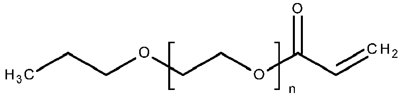 |
| (Formel Nr. 3) | |
| Propoxypolyethylenglycolmethacrylat | 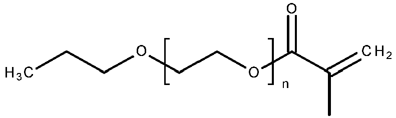 |
| (Formel Nr. 4) | |
| Butoxypolyethylenglycolacrylat | 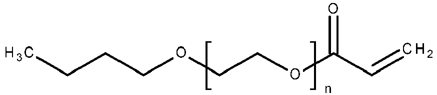 |
| (Formel Nr. 5) | |
| Butoxypolyethylenglycolmeth acrylat | 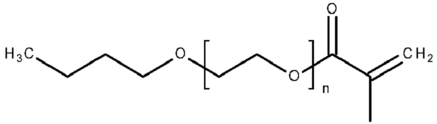 |
| (Formel Nr. 6) | |
| Ethylhexyloxypolyethylenglycolacrylat | 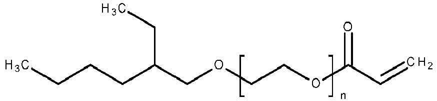 |
| (Formel Nr. 7) | |
| Ethylhexyloxypolyethylenglycolmethacrylat | 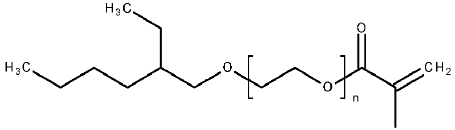 |
| (Formel Nr. 8) | |

Andere gebräuchliche Bezeichnungen für Ethoxypolyethylenglycolacrylat (Formel Nr. 1) sind beispielsweise Poly(ethylenglycol)ethyletheracrylat, Ethoxy-PEG-acrylat, Ethoxypoly(ethylenglycol)monoacrylat oder Poly(ethylenglycol)monoethylether-monoacrylat.

Diese PEG-Acrylate können kommerziell erworben werden, beispielsweise bei Arkema unter dem Handelsnamen Sartomer®, bei Evonik unter dem Handelsnamen Visiomer® oder bei Sigma Aldrich.

Die **Menge** der PEG-Acrylateinheiten (d) liegt in erfindungsgemäßen Copolymeren im Bereich von 15 bis 65 Gew.-%, bevorzugt 20 bis 60 Gew.-% und besonders bevorzugt 20 bis 55 Gew.-%, bezogen auf die Gesamtmenge von 100 Gew.-% aller Monomereinheiten.

In einer alternativen Ausführungsform beträgt die Menge an PEG-Acrylateinheiten (d) 20 bis 60 Gew.-% und die Menge an α,β-ethylenisch ungesättigten Carbonsäureestereinheiten (c), die sich von den PEG-Acrylateinheiten (d) unterscheiden, 0 bis 40 Gew.-%, bezogen auf die Gesamtmenge von 100 Gew.-% aller Monomereinheiten, wobei die Gesamtmenge an Carbonsäureestereinheiten 60 Gew.-% nicht überschreitet.

Die PEG-Acrylateinheiten (d) bilden somit zum Teil oder zur Gänze die α,β-ethylenisch ungesättigten Carbonsäureestereinheiten (c).

Typische **α,β-ethylenisch ungesättigten Carbonsäureestereinheiten (c),** welche sich von den PEG-Acrylateinheiten (d) unterscheiden sind
- **Alkyl-**, insbesondere C₄-C₁₈-Alkyl-, bevorzugt n-Butyl-, tert.-Butyl-, n-Pentyl- oder n-Hexyl(meth)acrylat;
- **Alkoxyalkyl**-, insbesondere C₄-C₁₈-Alkoxyalkyl-, bevorzugt C₄-C₁₂-Alkoxyalkyl(meth)acrylat;
- **Hydroxyalkyl**-, insbesondere C₄-C₁₈-Hydroxyalkyl-, bevorzugt C₄-C₁₂-Hydroxyalkyl(meth)acrylat;
- **Cycloalkyl-**, insbesondere C₅-C₁₈-Cycloalkyl-, bevorzugt C₆-C₁₂-Cycloalkyl, besonders bevorzugt Cyclopenty(meth)acrylat, Cyclohexyl(meth)acrylat, Cycloheptyl(meth)acrylat;
- **Alkylcycloalkyl-**, insbesondere C₆-C₁₂-Alkylcycloalkyl-, bevorzugt C₇-C₁₀-Alkylcycloalkyl, besonders bevorzugt Methylcyclopentyl(meth)acrylat und Ethylcyclohexyl(meth)acrylat;
- **Aryl**-, insbesondere C₆-C₁₄-Aryl-Monoester, bevorzugt Phenyl(meth)acrylat oder Benzyl(meth)acrylat;
- **aminogruppenhaltige** α,β-ethylenisch ungesättigte Carboxylsäureester wie beispielsweise Dimethylaminomethylacrylat oder Diethylaminoethylacrylat;
- **α,β-ethylenisch ungesättigte** Dicarbonsäuremonoalkylester, bevorzugt
   ∘ Alkyl-, insbesondere C₄-C₁₈-Alkyl-, bevorzugt n-Butyl-, tert.-Butyl-, n-Pentyl- oder n-Hexyl-, besonders bevorzugt Mono-n-butylmaleat, Mono-n-butylfumarat, Mono-n-butylcitraconat, Mono-n-butylitaconat, ganz besonders bevorzugt Mono-n-butylmaleat,
   ∘ Alkoxyalkyl-, insbesondere C₄-C₁₈-Alkoxyalkyl-, bevorzugt C₄-C₁₂-Alkoxyalkyl-,
   ∘ Hydroxyalkyl-, insbesondere C₄-C₁₈-Hydroxyalkyl-, bevorzugt C₄-C₁₂-Hydroxyalkyl-,
   ∘ Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
   ∘ Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexylitaconat;
   ∘ Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat,
   ∘ ungesättigte Polycarboxylsäurepolyalkylester wie beispielsweise Dimethylmaleat, Dimethylfumarat, Dimethylitaconat oder Diethylitaconat;
oder Mischungen davon.

In einer alternativen Ausführungsform enthält das erfindungsgemäße hydrierte Nitril-Dien-Carbonsäureester-Copolymer neben der α,β-ethylenisch ungesättigten Nitrileinheit (a), der konjugierten Dieneinheit (b) und der PEG-Acrylateinheit (d) abgeleitet von einem PEG-Acrylat der allgemeinen Formel (I) als ungesättigte Carbonsäureestereinheit (c) eine Dicarbonsäuremonoalkylestereinheit, bevorzugt Monobutylmaleat.

Bei einem bevorzugten erfindungsgemäßen hydrierten Nitril-Dien-Carbonsäureester-Copolymer ist die α,β-ethylenisch ungesättigte Nitrileinheit (a) abgeleitet von Acrylnitril oder Methacrylnitril, besonders bevorzugt von **Acrylnitril**, die konjugierte Dieneinheit (b) von Isopren oder 1,3-Butadien, besonders bevorzugt von **1,3-Butadien**, und die α,β-ethylenisch ungesättigte Carbonsäureestereinheit (c) ausschließlich eine PEG-Acrylateinheit (d) abgeleitet von PEG-Acrylat der allgemeinen Formel (I), wobei n gleich 2 bis 8 ist, besonders bevorzugt von PEG-Acrylat der **allgemeinen Formel (I) mit n gleich 2 oder 3**, wobei keine weitere Carbonsäureestereinheit (c) vorliegt.

Bei einem weiteren bevorzugten erfindungsgemäßen hydrierten Nitril-Dien-Carbonsäureester-Copolymer ist die α,β-ethylenisch ungesättigte Nitrileinheit (a) abgeleitet von Acrylnitril oder Methacrylnitril, besonders bevorzugt von **Acrylnitril**, die konjugierte Dieneinheit (b) von Isopren oder 1,3-Butadien, besonders bevorzugt von **1,3-Butadien**, und die α,β-ethylenisch ungesättigte Carbonsäureestereinheit (c) abgeleitet von einem ersten PEG-Acrylat der allgemeinen Formel (I), wobei n gleich 2 bis 12 ist, besonders bevorzugt von PEG-Acrylat der allgemeinen Formel (I) mit n gleich 2 oder 3 und einer α,β-ethylenisch ungesättigten Carbonsäureestereinheit (c) welche sich von den PEG-Acrylateinheiten (d) unterscheidet.

Zusätzlich kann das hydrierte Nitril-Dien-Carbonsäureester-Copolymer ein oder mehrere **weitere copolymerisierbare Monomere** (e) in einer Menge von 0 Gew.-% bis 20 Gew.-%, bevorzugt 0,1 Gew.-% bis 10 Gew.-% bezogen auf die Gesamtmenge von 100 Gew.-% aller Monomereinheiten enthalten. Die Mengen der übrigen Monomereinheiten (a), (b), (c) und (d) werden dann geeignet reduziert, so dass die Summe aller Monomereinheiten immer 100 Gew.-% ergibt. Das hydrierte Nitril-Dien-Carbonsäureester-Copolymer kann als weitere copolymerisierbare Monomere (e) ein oder mehrere
- **aromatische Vinylmonomere**, bevorzugt Styrol, α-Methylstyrol und Vinylpyridin,
- **fluorhaltige Vinylmonomere**, bevorzugt Fluorethylvinylether, Fluorpropylvinylether, o-Fluormethylstyrol, Vinylpentafluorbenzoat, Difluorethylen und Tetrafluorethylen, oder auch
- **α-Oefine**, bevorzugt C₂-C₁₂-Olefine wie beispielsweise Ethylen, 1-Buten, 4-Buten, 4-Methyl-1-penten, 1-Hexen oder 1-Octen,
- **nicht-konjugierte Diene**, bevorzugt C₄-C₁₂-Diene wie 1,4-Pentadien, 1,4-Hexadien, 4-Cyanocyclohexen, 4-Vinylcyclohexen, Vinylnorbonen, Dicyclopentadien oder auch
- **Alkine** wie 1- oder 2-Butin,
- **α,β-ethylenisch ungesättigte Monocarbonsäuren,** bevorzugt Acrylsäure, Methacrylsäure, Crotonsäure oder Zimtsäure,
- **α,β-ethylenisch ungesättigte Dicarbonsäuren**, bevorzugt Maleinsäure, Fumarsäure, Citraconsäure, Itakonsäure,
- **copolymerisierbare Antioxidantien**, beispielsweise N-(4-Anilinphenyl)acrylamid, N-(4-Anilinphenyl)methacrylamid, N-(4-Anilinphenyl)cinnamamid, N-(4-Anilinphenyl)crotonamid, N-Phenyl-4-(3-vinylbenzyloxy)anilin, N-Phenyl-4-(4-vinylbenzyloxy)anilin oder
- **vernetzbare Monomere**, beispielsweise Divinyl-Komponenten wie beispielsweise Divinylbenzol;
enthalten.

In einer alternativen Ausführungsform enthält das hydrierte Nitril-Dien-Carbonsäureester-Copolymere als **PEG-Acrylateinheiten (c)** Ethoxy-, Butoxy- oder Ethylhexyloxypolyethylenglycol(meth)acrylat mit **2 bis 12 Ethylenglycol-Wiederholungseinheiten**, besonders bevorzugt Ethoxy- oder Butoxy Polyethylenglycol(meth)acrylat mit **2 bis 5** Ethylenglycol-Wiederholungseinheiten und ganz besonders bevorzugt Ethoxy- oder Butoxypolyethylenglycol(meth)acrylat mit **2 oder 3** Ethylenglycol-Wiederholungseinheiten.

In einer weiteren alternativen Ausführungsform des hydrierten Nitril-Dien-Carbonsäureester-Copolymeres ist n gleich 2 oder 3, R gleich Ethyl oder Butyl und R¹ gleich Wasserstoff oder Methyl, bevorzugt dass n **gleich 2, R gleich Butyl und R¹ gleich Methyl.**

In einer weiteren alternativen Ausführungsform weist das hydrierte Nitril-Dien-Carbonsäureester-Copolymer 8 bis 18 Gew.-% Acrylnitrileinheiten, 27 bis 65 Gew.-% 1,3-Butadieneinheiten und 27 bis 55 Gew.-% PEG-2-Acrylateinheiten oder PEG-3-Acrylateinheiten auf.

Am meisten bevorzugt enthält das hydrierte Nitril-Dien-Carbonsäureester-Copolymer
- 13 bis 17 Gew.-% α,β-ethylenisch ungesättigten Nitrileinheit (a), bevorzugt Acrylnitril,
- 36 bis 44 Gew.-% der konjugierten Dieneinheit (b), bevorzugt 1,3-Butadien, und
- 43 bis 47 Gew.-% PEG-Acrylateinheit (d), abgeleitet von einem PEG-Acrylat der allgemeinen Formel (I), bevorzugt Butoxydiethylenglycolmethacrylat.

Das erfindungsgemäße hydrierte Nitril-Dien-Carbonsäureester-Copolymer weist typischerweise ein Zahlenmittel des **Molekulargewichts (Mn)** von 10,000 g/mol bis 2,000,000 g/mol, bevorzugt 50,000 g/mol bis 1,000,000 g/mol, besonders bevorzugt 100,000 g/mol bis 500,000 g/mol und ganz besonders bevorzugt 150,000 g/mol bis 300,000 g/mol auf.

Das erfindungsgemäße hydrierte Nitril-Dien-Carbonsäureester-Copolymer weist typischerweise einen **Polydispersitätsindex** (PDI = M_{w}/Mₙ, wobei M_{w} das Gewichtsmittel des Molekulargewichts darstellt) von 1,5 bis 6, bevorzugt 2 bis 5 und besonders bevorzugt 2,5 bis 4 auf.

Das erfindungsgemäße hydrierte Nitril-Dien-Carbonsäureester-Copolymer weist typischerweise eine **Mooney Viskosität** (ML1+4@100°C) von 10 bis 150, bevorzugt von 20 bis 120 und besonders bevorzugt von 25 bis 100 auf.

Die erfindungsgemäßen Ter- und Quartärpolymere die PEG-2-MA Wiederholungseinheiten enthalten, sind dadurch gekennzeichnet, dass diese ganz besonders wenig Gehalt an Gel aufweisen.

Das erfindungsgemäße hydrierte Nitril-Dien-Carbonsäureester-Copolymer ist dadurch gekennzeichnet, dass es eine Glasübergangstemperatur Tg, gemessen nach der DIN 53765, von -40 °C oder weniger aufweist.

Das erfindungsgemäße hydrierte Nitril-Dien-Carbonsäureester-Copolymer ist dadurch gekennzeichnet, dass es die Herstellung von Vulkanisaten ermöglicht, bei denen
- die **Glasübergangstemperatur Tg**, gemessen nach der DIN 53765, einen Wert von weniger als -40 °C, bevorzugt einen Wert von -44 °C oder weniger und besonders bevorzugt einen Wert von -47 °C oder weniger aufweist, und
- die **Quellung in IRM 903**, gemessen nach DIN ISO 1817 für 7 Tage bei 150 °C, einen Wert von 51 % oder weniger, bevorzugt einen Wert von 45 % oder weniger und besonders bevorzugt einen Wert von 43 % oder weniger aufweist.

### Verfahren zur Herstellung von unhydrierten Nitril-Dien-Carbonsäureester-Copolymeren

Gegenstand der Erfindung ist ferner ein Verfahren zur Herstellung von unhydrierten Nitril-Dien-Carbonsäureester-Copolymeren, dadurch gekennzeichnet, dass mindestens ein α,β-ethylenisch ungesättigtes Nitril, mindestens ein konjugiertes Dien und mindestens ein α,β-ethylenisch ungesättigter Carbonsäuremonoester einer Emulsionspolymerisation unterworfen werden.

Bevorzugter Gegenstand der Erfindung ist ein Verfahren zur Herstellung von unhydrierten Nitril-Dien-Carbonsäureester-Copolymeren, dadurch gekennzeichnet, dass **0,1 bis 20 Gew.-%,** bevorzugt 1 bis 19 Gew.-% und besonders bevorzugt 8 bis 18 Gew.-% zumindest eines α,β-ethylenisch ungesättigten **Nitrils**, **15 bis 74,9 Gew.-%,** bevorzugt 21 bis 73 Gew.-% und besonders bevorzugt 27 bis 65 Gew.-% zumindest eines konjugierten **Diens** und **25 bis 65 Gew.-%**, bevorzugt 26 bis 60 Gew.-% und besonders bevorzugt 27 bis 55 Gew.-% zumindest eines **α,β-ethylenisch ungesättigten Carbonsäureesters,** wobei **zumindest 15 Gew.-%,** bevorzugt zumindest 20 Gew.-% des α,β-ethylenisch ungesättigten Carbonsäureesters bezogen auf die Gesamtmenge aller Monomere von 100 Gew.-%, **PEG-Acrylat der allgemeinen Formel (I)** 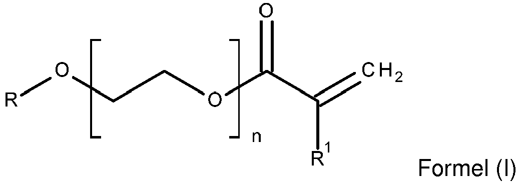 sind, wobei
- R: gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
- n: gleich 2 bis 12, bevorzugt 2 bis 8, besonders bevorzugt 2 bis 5 und ganz besonders bevorzugt 2 oder 3 ist und
- R¹: gleich Wasserstoff oder CH₃- ist,
einer Emulsionspolymerisation unterworfen werden.

Die Herstellung der zur Hydrierung als Zwischenprodukt benötigten unhydrierten Nitril-Dien-Carbonsäureester-Copolymeren kann durch Polymerisation der vorgenannten Monomere erfolgen und ist in der Literatur (z.B. Houben-Weyl, Methoden der Organischen Chemie Bd.14/1, 30 Georg Thieme Verlag Stuttgart 1961) umfangreich beschrieben und ist nicht im Besonderen beschränkt. Im Allgemeinen handelt es sich um ein Verfahren in dem α,β-ethylenisch ungesättigte Nitrileinheiten, konjugierte Dieneinheiten, und PEG-Acrylateinheiten nach Belieben copolymerisiert werden. Als Polymerisationsverfahren kann jedes bekannte Emulsions-Polymerisationsverfahren, Suspensions-Polymerisationsverfahren, Bulk-Polymerisationsverfahren und Lösungs-Polymerisationsverfahren verwendet werden. Bevorzugt ist dabei das Emulsions-Polymerisationsverfahren. Unter Emulsionspolymerisation wird insbesondere ein an sich bekanntes Verfahren verstanden, bei dem als Reaktionsmedium meist Wasser verwendet wird (siehe u. a. Römpp Lexikon der Chemie, Band 2, 10. Auflage 1997; P. A. Lovell, M. S. EI-Aasser, Emulsion Polymerization and Emulsion Polymers, John Wiley & Sons, ISBN: 0471 96746 7; H. Gerrens, Fortschr. Hochpolym. Forsch. 1, 234 (1959)). Die Einbaurate des Termonomers kann durch den Fachmann ohne weiteres so eingestellt werden, dass ein erfindungsgemäßes Terpolymer erhalten wird. Die Monomere können vorgelegt werden bzw. durch Inkrementierung in mehreren Schritten umgesetzt werden.

Gegenstand der Erfindung sind somit auch die zur Herstellung der erfindungsgemäßen hydrierten Nitril-Dien-Carbonsäureester-Copolymere notwendigen **unhydrierten** Nitril-Dien-Carbonsäureester-Copolymere, enthaltend
(a) **0,1 bis 20 Gew.-%,** bevorzugt 1 bis 19 Gew.-% und besonders bevorzugt 8 bis 18 Gew.-% zumindest einer α,β-ethylenisch ungesättigten **Nitrileinheit,**
(b) **15 bis 74,9 Gew.-%,** bevorzugt 21 bis 73 Gew.-% und besonders bevorzugt 27 bis 65 Gew.-% zumindest einer konjugierten **Dieneinheit** und
(c) **25 bis 65 Gew.-%,** bevorzugt 26 bis 60 Gew.-% und besonders bevorzugt 27 bis 55 Gew.-% zumindest einer **α,β-ethylenisch ungesättigten Carbonsäureestereinheit,**
wobei **zumindest 15 Gew.-%**, bevorzugt zumindest 20 Gew.-% der α,β-ethylenisch ungesättigten Carbonsäureestereinheiten (c) bezogen auf die Gesamtmenge aller Monomereinheiten von 100 Gew.-%, von einem **PEG-Acrylat (d) der allgemeinen Formel (I)** 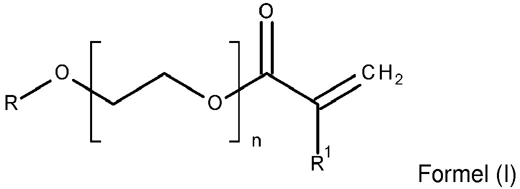 abgeleitet sind, wobei
- R: gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
- n: gleich 2 bis 12, bevorzugt 2 bis 8, besonders bevorzugt 2 bis 5 und ganz besonders bevorzugt 2 oder 3 ist und
- R¹: gleich Wasserstoff oder CH₃- ist,
sowie deren Verwendung zur Herstellung von hydrierten Nitril-Dien-Carbonsäureester-Copolymeren.

### Metathese und/oder Hydrierung

Es ist auch möglich, dass sich an die Herstellung des unhydrierten Nitril-Dien-Carbonsäureester-Copolymers eine Metathese-Reaktion zur Reduktion des Molekulargewichts des Nitril-Dien-Carbonsäureester-Copolymers oder eine Metathese-Reaktion und eine nachfolgende Hydrierung oder nur eine Hydrierung anschließt. Diese Metathese- bzw. Hydrierungsreaktionen sind bei dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden.

### Verfahren zur Herstellung von hydrierten Nitril-Dien-Carbonsäureester-Copolymeren

Gegenstand der Erfindung ist auch ein Verfahren zur Herstellung hydrierter Nitril-Dien-Carbonsäureester-Copolymere, dadurch gekennzeichnet, dass mindestens ein α,β-ethylenisch ungesättigtes Nitril, mindestens ein konjugiertes Dien und mindestens ein PEG-Acrylat der allgemeinen Formel (I) einer Emulsionspolymerisation unterworfen und anschließend hydriert werden.

Im Anschluss an die Copolymerisation der unhydrierten Nitril-Dien-Carbonsäureester-Copolymere werden diese, zumindest teilweise, hydriert (Wasserstoff-AdditionsReaktion). In den zumindest teilweise hydrierten Nitril-Dien-Copolymeren ist zumindest ein Teil der C=C-Doppelbindungen der vom konjugierten Dien abgeleiteten Wiederholungseinheit spezifisch hydriert. Der Grad der Hydrierung der konjugierten Dieneinheiten (b) ist in erfindungsgemäßen hydrierten Nitril-Dien-Carbonsäureester-Copolymere 50 % bis 100 %, bevorzugt 90 % bis 100 % und besonders bevorzugt 99 % bis 100 %.

Bei dem Begriff "**hydriertes Nitril-Dien-Carbonsäureester-Copolymer**" handelt es sich im Rahmen dieser Erfindung somit um ein Copolymer enthaltend zumindest eine α,β-ethylenisch ungesättigte Nitrilmonomereinheit, zumindest eine konjugierte Dienmonomereinheit und zumindest eine α,β-ethylenisch ungesättigte Carbonsäureestereinheit, wobei die konjugierten Dieneinheiten zu 50 % bis 100 %, bevorzugt 90 % bis 100 % und besonders bevorzugt 99 % bis 100 % **hydriert** sind.

Die Hydrierung von Nitril-Dien-Copolymeren ist bekannt, beispielsweise aus US-A-3 700 637, DE-A-2 539 132, DE-A-3 046 008, DE-A-3 046 251, DE-A-3 227 650, DE-A-3 329 974, EP-A-111 412, FR-B 2 540 503. Hydrierte Nitril-Dien-Copolymere zeichnen sich durch hohe Reißfestigkeit, geringen Abrieb, niedrige bleibende Verformung nach Druck- und Zugbeanspruchung und gute Ölbeständigkeit, vor allem aber durch bemerkenswerte Stabilität gegen thermische und oxidative Einflüsse aus.

### Vulkanisierbare Mischungen enthaltend hydrierte Nitril-Dien-Carbonsäureester-Copolymere

Gegenstand der vorliegenden Erfindung sind ferner **vulkanisierbare Mischungen** enthaltend hydrierten Nitril-Dien-Carbonsäureester-Copolymere und mindestens einen **Vernetzer.** In einer bevorzugten Ausführungsform handelt es sich um vulkanisierbare Mischungen, die zusätzlich mindestens einen **Füllstoff** enthalten.

Als **Vernetzer** kommen beispielsweise **peroxidische Vernetzer** in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, *tert.*-Butylperbenzoat, 2,2 Bis(t-butylperoxy)buten, 4,4-Di-*tert.*-butylperoxynonylvalerat, Dicumylperoxid, 2,5-Dimethyl-2,5-di(t-butylperoxy)hexan, *tert.*-Butylcumylperoxid, 1,3-Bis(t-butylperoxyisopropyl)benzol, Di-t-butylperoxid und 2,5-Dimethyl-2,5-di(t-butylperoxy)-hex-3-in.

Es kann vorteilhaft sein, neben diesen peroxidischen Vernetzern noch weitere Zusätze zu verwenden, mit deren Hilfe die **Vernetzungsausbeute erhöht** werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Zinkdiacrylat, Zinkdimethacrylat, 1,2-Polybutadien oder N,N'-m-Phenylenbismaleinimid geeignet.

Die **Gesamtmenge des oder der peroxidischen Vernetzer** liegt üblicherweise im Bereich von 1 bis 20 phr, bevorzugt im Bereich von 1,5 bis 15 phr und besonders bevorzugt im Bereich von 2 bis 10 phr, bezogen auf das hydrierte Nitril-Dien-Carbonsäureester -Copolymer.

Als **Vernetzer** können auch Schwefel in elementarer löslicher oder unlöslicher Form oder Schwefelspender eingesetzt werden.

Als **Schwefelspender** kommen beispielsweise Dimorpholyldisulfid (DTDM), 2-Morpholino-dithiobenzothiazol (MBSS), Caprolactamdisulfid, Dipentamethylenthiuramtetrasulfid (DPTT) und Tetramethylthiuramdisulfid (TMTD) in Frage.

Auch bei der **Schwefelvulkanisation** des erfindungsgemäßen hydrierten Nitril-Dien-Carbonsäureester-Copolymers ist es möglich, weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen hydrierten Nitril-Dien-Carbonsäureester-Copolymere aber auch nur in Gegenwart der oben genannten Zusätze erfolgen, d.h. ohne Zusatz von elementarem Schwefel oder Schwefelspendern.

Als **Zusätze**, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als **Dithiocarbamate** können beispielsweise eingesetzt werden: Ammoniumdimethyldithiocarbamat, Natriumdiethyldithiocarbamat (SDEC), Natriumdibutyldithiocarbamat (SDBC), Zinkdimethyldithiocarbamat (ZDMC), Zinkdiethyldithiocarbamat (ZDEC), Zinkdibutyldithio-carbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithio-carbamat, Nickeldimethyldithiocarbamat und Zinkdiisononyldithiocarbamat. Als **Thiurame** können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuram-disulfid, Dipentamethylenthiuramtetrasulfid und Tetraethylthiuramdisulfid (TETD). Als **Thiazole** können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol. Als **Sulfenamidderivate** können zum Beispiel eingesetzt werden: N-Cyclohexyl-2-benzothiazylsulfenamid (CBS), N-*tert.*-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylen-thiocarbamyl-N-*tert.*butylsulfenamid und Oxydiethylenthiocarbamyl-N-oxyethylensulfenamid. Als **Xanthogenate** können zum Beispiel eingesetzt werden: Natriumdibutylxanthogenat, Zinkisopropyldibutylxanthogenat und Zinkdibutylxanthogenat. Als **Guanidinderivate** können zum Beispiel eingesetzt werden: Diphenylguanidin (DPG), Di-o-tolylguanidin (DOTG) und o-Tolylbiguanid (OTBG). Als **Dithiophosphate** können beispielsweise eingesetzt werden: Zinkdialkydithiophosphate (Kettenlänge der Alkylreste C₂ bis C₁₆), Kupferdialkyldithiophosphate (Kettenlänge der Alkylreste C₂ bis C₁₆) und Dithiophoshorylpolysulfid. Als Caprolactam kann beispielsweise Dithio-bis-caprolactam eingesetzt werden. Als **Thioharnstoffderivate** können beispielsweise N,N'-Diphenylthioharnstoff (DPTU), Diethylthioharnstoff (DETU) und Ethylenthioharnstoff (ETU) eingesetzt werden. Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der hydrierten Nitril-Dien-Carbonsäureester-Copolymere eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyl-dithiocarbamat, Zinkdibutyldithiocarbamat, Zinkdimethyldithiocarbamat und Dithiobis-caprolactam.

Die **Vernetzungsmittel** und zuvor genannten Zusätze können jeweils in Mengen von 0,05 phr bis 10 phr, vorzugsweise 0,1 phr bis 8 phr, insbesondere 0,5 phr bis 5 phr (Einzeldosierung, jeweils bezogen auf die Wirksubstanz) bezogen auf das hydrierte Nitril-Dien-Carbonsäureester-Copolymer eingesetzt werden.

Bei der Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin, Polyamine und Polyetheramine.

### Andere optionale Komponenten:

Optional können derartige vulkanisierbare Mischungen auch noch ein oder mehrere dem Fachmann für Kautschuke **geläufige Additive und Faserstoffe** enthalten. Diese umfassen Alterungsschutzmittel, Reversionsschutzmittel, Lichtschutzmittel, Ozonschutzmittel, Verarbeitungshilfsmittel, Formtrennmittel, Weichmacher, Mineralöle, Tackifier, Treibmittel, Farbstoffe, Pigmente, Wachse, Harze, Streckmittel, Füllstoffe, wie beispielsweise Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanoröhrchen (Carbon nano tubes), Graphen, Teflon (letzteres bevorzugt in Pulverform), oder Silikate, Ruße, Kieselsäuren, pyrogene Kieselsäure, Silica, silanisiertes Silica, Naturstoffe wie z.B. Tonerde, Kaoline, Wollastonit, organische Säuren, Vulkanisationsverzögerer, Metalloxide, Festigkeitsträger (Fasern) aus Glas, Corde, Gewebe, Fasern aus aliphatischen und aromatischen Polyamiden (Nylon®, Aramid®), Polyestern und Naturfaserprodukte, Salze von ungesättigten Carbonsäuren wie beispielsweise Zinkdiacrylat (ZDA), Zinkmethacrylate (ZMA) und Zinkdimethylacrylat (ZDMA), flüssige Acrylate, oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxyethoxy)silan, N-Cyclohexyl-3-aminopropyltrimethoxysilan, 3-Aminopropyltrimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 Gew.-Teile, bezogen auf 100 Gew.-Teile des Nitrilkautschuks.

Die Gesamtmenge an Additiven und Faserstoffen liegt typischerweise im Bereich von 1 bis 300 Gew.-Teile, bezogen auf 100 Gew.-Teile des Nitrilkautschuks.

### Verfahren zur Herstellung einer vulkanisierbaren Mischungen enthaltend hydrierte Nitril-Dien-Carbonsäureester-Copolymere

Gegenstand der Erfindung ist ferner ein Verfahren zur Herstellung vulkanisierbarer Mischungen enthaltend hydrierte Nitril-Dien-Carbonsäureester-Copolymere durch Mischung des hydrierten Nitril-Dien-Carbonsäureester-Copolymers mit mindestens einem Vernetzer und den optional weiteren enthaltenen Komponenten. Dieser Mischvorgang kann in allen in der Gummiindustrie üblichen Mischaggregaten, wie z.B. Innenmischern, Banbury Mischern oder Walzen, durchgeführt werden. Die Reihenfolge der Zudosierung ist für den Fachmann durch geeignete Versuche ohne Probleme ermittelbar.

Beispielhaft sind nachfolgend zwei Varianten dargestellt, wie vorgegangen werden kann:

### Verfahren A: Herstellung im Innenmischer

Bevorzugt sind Innenmischer mit ineinandergreifender Rotorgeometrie.

Zum Startzeitpunkt erfolgt die Beschickung des Innenmischers mit dem in Ballenform vorliegenden hydrierten Nitril-Dien-Carbonsäureester-Copolymer und es kommt zur Zerkleinerung der Ballen. Nach einem geeigneten Mischzeitraum erfolgt die Zugabe der Füllstoffe und Additive. Das Mischen erfolgt unter Kontrolle der Temperatur mit der Maßgabe, dass das Mischgut für eine geeignete Zeit bei einer Temperatur im Bereich von 80 °C bis 150 °C verbleibt. Nach einem weiteren geeigneten Mischzeitraum erfolgt die Zugabe der weiteren Mischungsbestandteile wie optional Stearinsäure, Antioxidantien, Weichmacher, Weißpigmente (beispielsweise Titandioxid), Farbstoffen und sonstigen Verarbeitungswirkstoffen. Nach einem weiteren geeigneten Mischzeitraum wird der Innenmischer gelüftet und der Schacht gereinigt. Nach einem weiteren geeigneten Zeitraum wird der Innenmischer unter Erhalt der vulkanisierbaren Mischung entleert. Unter geeigneten Zeiträumen sind einige Sekunden bis einige Minuten zu verstehen. Die Vernetzungschemikalien können entweder in einem separaten Schritt auf der Walze eingemischt werden, vor allem wenn bei erhöhter Mischtemperatur gemischt wird oder direkt im Innenmischer mit hinzugegeben werden. Hierbei ist darauf zu achten, dass die Mischtemperatur unterhalb der Reaktionstemperatur der Vernetzungschemikalien liegt.

Die so hergestellten vulkanisierbaren Mischungen können in üblicher Weise, etwa durch die Mooney-Viskosität, durch Mooney-Scorch oder durch einen Rheometertest beurteilt werden.

### Verfahren B: Herstellung auf der Walze

Werden Walzen als Mischaggregate verwendet, wird zuerst das hydrierte Nitril-Dien-Carbonsäure Copolymer auf die Walze gegeben. Nachdem sich ein homogenes Walzfell gebildet hat werden die Füllstoffe, Weichmacher und andere Additive außer den Vernetzungschemikalien zugegeben. Nach Einmischung aller Komponenten werden die Vernetzungschemikalien zugegeben und eingemischt. Danach wird die Mischung je dreimal rechts und dreimal links eingeschnitten und 5 mal gestürzt. Das fertige Walzfell wird auf die gewünschte Dicke gewalzt und entsprechend der gewünschten Testmethoden weiterverarbeitet..

### Verfahren zur Herstellung von Vulkanisaten enthaltend hydrierte Nitril-Dien-Carbonsäureester-Copolymere

Gegenstand der Erfindung ist ferner das **Verfahren zur Herstellung von Vulkanisaten**, bevorzugt als Formteile, enthaltend hydrierte Nitril-Dien-Carbonsäureester-Copolymere **(Vulkanisation)**, dadurch gekennzeichnet, dass man die vulkanisierbare Mischung enthaltend hydrierte Nitril-Dien-Carbonsäureester-Copolymere einer Vulkanisation unterwirft, bevorzugt in einem Formgebungsverfahren und ferner bevorzugt bei Temperaturen im Bereich von 100 °C bis 250 °C, besonders bevorzugt bei Temperaturen im Bereich von 120 °C bis 250 °C und ganz besonders bevorzugt Temperaturen im Bereich von 130 °C bis 250 °C. Die vulkanisierbaren Mischungen werden hierzu mit Kalandern, Walzen oder Extrudern weiterverarbeitet. Die vorgeformte Masse wird sodann in Pressen, Autoklaven, Heißluftanlagen oder in sogenannten automatischen Mattenvulkanisationsanlagen ("Auma") vulkanisiert, wobei sich bevorzugt Temperaturen im Bereich von 100 °C bis 250 °C, besonders bevorzugt Temperaturen im Bereich von 120 °C bis 250 °C und ganz besonders bevorzugt Temperaturen im Bereich von 130 °C bis 250 °C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

Gegenstand der Erfindung sind ferner die so erhältlichen **Vulkanisate** basierend auf erfindungsgemäßen hydrierten Nitril-Dien-Carbonsäureester-Copolymeren.

Gegenstand der Erfindung ist auch die **Verwendung** der Vulkanisate basierend auf erfindungsgemäßen, hydrierten Nitril-Dien-Carbonsäureester-Copolymeren zur Herstellung von Formteilen ausgewählt aus der Gruppe bestehend aus Riemen, Dichtungen, Walzen, Schuhkomponenten, Schläuchen, Dämpfungselementen, Statoren und Kabelmänteln, bevorzugt Riemen und Dichtungen.

Gegenstand der Erfindung sind somit Vulkanisate als **Formteile** basierend auf erfindungsgemäßem hydrierten Nitril-Dien-Carbonsäureester-Copolymeren, die bevorzugt ausgewählt sind aus Riemen, Dichtungen, Walzen, Schuhkomponenten, Schläuchen, Dämpfungselementen, Statoren und Kabelmänteln, besonders bevorzugt Riemen und Dichtungen. Die hierfür beispielsweise einsetzbaren Methoden wie Molding, Spritzguss- oder Extrusionsverfahren sowie die entsprechende Spritzgießvorrichtungen oder Extruder sind dem Fachmann hinlänglich bekannt. Bei der Herstellung dieser Formteile können den erfindungsgemäßen hydrierten Nitril-Dien-Carbonsäureester-Copolymeren noch die gängigen, dem Fachmann bekannten und von ihm mit üblichem Fachwissen geeignet auszuwählenden Hilfsmittel wie z.B. Füllstoffe, Füllstoffaktivatoren, Beschleuniger, Vernetzer, Ozonschutzmittel, Antioxidationsmittel, Verarbeitungsöle, Extenderöle, Weichmacher, Aktivatoren oder Anvulkanisationshemmer zugesetzt werden.

Der **Vorteil** der Erfindung liegt insbesondere darin, dass die erfindungsgemäßen, hydrierten Nitril-Dien-Carbonsäureester-Copolymere zur Herstellung von Vulkanisaten geeignet sind, die eine Tg von weniger als -40 °C und eine Quellung von 51 % oder weniger aufweisen und somit den Vulkanisaten auf Basis der bekannten HNBR-Copolymeren überlegen sind.

### Beispiele:

### Messverfahren:

Der **RDB-Gehalt (Restdoppelbindungsgehalt)** in % wird durch die folgende FT-IR Messung bestimmt: Die Aufnahme der IR-Spektren des hydrierten Nitril-Dien-Carbonsäureester-Copolymers vor, während und nach der Hydrierung erfolgt durch ein IR-Gerät mit der Bezeichnung Thermo Nicolet FT-IR Spektrometer Type AVATAR 360. Dazu wird eine monochlorbenzolische Lösung des hydrierten Nitril-Dien-Carbonsäureester-Copolymers auf ein NaCI-Plättchen aufgebracht, zu einem Film getrocknet und vermessen. Der Hydriergrad wird mittels FT-IR Analyse nach der ASTM D 567095 Methode ermittelt.

Die Bestimmung der Werte für die **Mooney-Viskosität** (ML1+4@100°C) erfolgt jeweils mittels eines Scherscheibenviskosimeters nach ASTM D1646-07.

Die Bestimmung des **Molekulargewichts** erfolgt durch **Gelpermeationschromatographie** (GPC). Verwendet wurde ein modulares System mit Shodex RI-71 Differentialrefraktometer, Autosampler S 5200 (Firma SFD), Säulenofen (ERC-125), Pumpe Shimadzu LC 10 AT) und einer Säulenkombination aus 3 PLgel 10 µm Mixed B 300x7,5 mm von Agilent. Als Lösungsmittel diente Tetrahydrofuran, die enthaltenen Molekulargewichte beziehen sich auf Polystyrol-Standards der Firma PSS (Mainz). Die fertigen THF-Probelösungen sind durch Spritzenvorsatzfilter mit 0,45 µm PTFE-Membranen und 25 mm Durchmesser filtriert. Die Messungen wurden bei 40°C und einer Fließgeschwindigkeit von 1 ml/min in Tetrahydrofuran durchgeführt.

Die Bestimmung der molekularen Parameter wie Zahlenmittel des Molekulargewichts Mₙ, Massenmittel des Molekulargewichts M_{w} und dem daraus resultierenden Polydispersitätsindex PDI erfolgt aus dem RI-Signal mittels der Software "Empower 2 data base" der Firma Waters.

Der **Stickstoffgehalt** zur Bestimmung des ACN-Gehalts wird in den nitrilgruppenhaltigen Copolymerkautschuken nach Vario EL cube bestimmt. Verbrennung der Einwaage im CHN-Automaten bei etwa 1150°C in Gegenwart von Oxidationskatalysatoren und Sauerstoff, Aliquotierung der Verbrennungsgase, Absorption der Störkomponenten und Detektion von N₂ durch Wärmeleitfähigkeitsmesszelle (WLD).

Die **Bestimmung der Mikrostruktur und des Termonomergehaltes** der einzelnen Polymere erfolgte mittels ¹H-NMR (Gerät: Bruker DPX400 mit Software TopSpin 1.3, Messfrequenz 400 MHz, Lösungsmittel 1,1,2,2-Tetrachlorethan-d2).

Die **Glasübergangstemperatur** wurde mit Hilfe einer DSC Messung nach ASTM E 1356-03 bzw. nach DIN 53765 erhalten. Dafür wurden zwischen 10 mg und 15 mg der Probe in ein Aluminiumpfännchen eingewogen und versiegelt. Das Pfännchen wurde in einem DSC Gerät von TA Instruments mit einer Heizrate von 10 K/min zweimal von -150 °C auf 150 °C aufgeheizt. Die Glasübergangstemperatur wurde aus der zweiten Aufheizkurve nach dem Standard Mittelwertverfahren bestimmt.

**Quellung:** Hantelförmige Probekörper, wie sie für die Zugprüfung verwendet werden, wurden zur Bestimmung der Quellung bei 150 °C für 168h in IRM903 nach DIN ISO 1817 gelagert. Im Anschluss wurden die Proben ausgemessen und ausgewogen und die Volumenquellung und Massezunahme bestimmt. Daran anschließend wurden die Zugfestigkeit und Dehnung nach ASTM D2240-81 bestimmt.

### Folgende Substanzen wurden in den Beispielen eingesetzt:

Die nachfolgenden Chemikalien wurden als Handelsprodukte der jeweils angegebenen Firmen bezogen oder stammen aus Produktionsanlagen der angegebenen Firmen.

**Für die Polymerisation:**

| | |
|---|---|
| **MEA** | Methoxyethylacrylat, Molekulargewicht 130,14 g/mol, Alfa Aesar |
| **BA** | Butylacrylat, Molekulargewicht 128,17 g/mol, Sigma-Aldrich |
| **PEG-2-MA** | Butoxydiethylenglycolmethacrylat (BDGMA), Molekulargewicht 230,3 g/mol, Evonik Industries AG |
| **PEG-3-MA** | Ethoxytriethylenglycolmethacrylat, Molekulargewicht 246,3 g/mol, Evonik Industries AG |
| **Disponil® SDS G** | Natrium-Laurylsulfat; BASF |
| **Na-Salz der disproportionierten Harzsäure** CAS 61790-51-0 | |
| **Na₂CO₃** | Merck KGaA |
| **t-DDM** | tertiäres Dodecylmercaptan; LANXESS Deutschland GmbH |
| **Glidox® 500** | Pinanhydroperoxid; Renessenz |
| **"Prämix-Lösung Fe(II)SO₄"** | enthält 0,986 g Fe(II)SO₄*7 H₂O und 2,0 g Rongalit® C in 400 g Wasser |
| **Rongalit C®** | Natriumsalz eines Sulfinsäurederivates; Handelsprodukt der BASF |
| **Diethylhydroxylamin** | Merck KGaA |
| **Vulkanox**® **BKF** | 2,2'-Methylen-bis-(4-methyl-6-*tert.*-butyl-phenol); LANXESS Deutschland GmbH |

**In der vulkanisierbaren Zusammensetzung verwendeten Substanzen:**

| | |
|---|---|
| **Corax® N330** | Ruß; Orion Engineered Carbons |
| **Rhenofit® DDA** | 70%iger Masterbatch basierend auf octyliertem Diphenylamin; Rheinchemie |
| **Vulkanox® ZMB2/C5** | Zinksalz von 4- und 5-Methyl-2-mercaptobenzthiazol; LANXESS Deutschland GmbH |
| **Maglite®** | Magnesiumoxid; CP Hall. |
| **TAIC** | Triallylisocyanurat, 70% Masterbatch; Chemie GmbH & Co KG. |
| **Perkadox® 14-40** | Di(*tert.*-butylperoxyisopropyl)benzol 40% geträgert auf Kieselsäure; Akzo Nobel Polymer Chemicals BV |

### I Herstellung der unhydrierten Nitril-Dien-Carbonsäureester-Copolymere (NBR 1 - 8)

Die Herstellung der in den folgenden Beispielserien eingesetzten NBR-Copolymere 1 bis 8 erfolgte nach der in Tabelle 1 angegebenen Basisrezeptur, wobei sämtliche Einsatzstoffe in Gew.-% bezogen auf 100 Gew.-% der Monomermischung angegeben sind. Tabelle 1 nennt auch die jeweiligen Polymerisationsbedingungen (Temperatur, Umsatz und Zeit).

**Tabelle 1: Herstellung der unhydrierten Nitril-Dien-Carbonsäureester-Copolymere (NBR 1 - 8; erfindungsgemäße Beispiele sind mit einem Stern * gekennzeichnet).**

| **NBR** | **1** | **2** | **3*** | **4*** | **5*** | **6*** | **7*** | **8*** |
|---|---|---|---|---|---|---|---|---|
| **Monomere** | | | | | | | | |
| Acrylnitril (ACN) | 17 | 18 | 14 | 18 | 12 | 15 | 17 | 17 |
| 1,3-Butadien (BD) | 35 | 42 | 35 | 31 | 30 | 32 | 25 | 32 |
| Butylacrylat (BA) | 48 | | | | 17,4 | 28 | 13 | 24 |
| Methoxyethylacrylat (MEA) | | 40 | | | | | | |
| Butoxydiethylenglycolmethacrylat (PEG-2-MA) | | | | 51 | | | | |
| Ethoxytriethylenglycolmethacrylat (PEG-3-MA) | | | 51 | | 40,6 | 25 | 45 | 27 |
| Gesamtwassermenge | 190 | 190 | 190 | 190 | 190 | 190 | 190 | 190 |
| Disponil® SDS G | 1,8 | 2,4 | | 2,4 | | | | |
| Na-Salz der disproportionierten Harzsäure | 0,5 | 0,5 | | 0,5 | | | | |
| Na₂CO₃ | 0,12 | 0,12 | | 0,12 | | | | |
| Fettsäure | | | 2,6 | | 2,6 | 2,2 | 2,2 | 2,4 |
| pH | 7,5±0,5 | 7,5±0,5 | 11,5±0,5 | 7,5±0,5 | 11,5±0,5 | 11,5±0,5 | 11,5±0,5 | 11,5±0,5 |
| t-DDM | 0,29 | 0,55 | 0,5 | 0,15 | 0,35 | 0,36 | 0,3 | 0,34 |
| Glidox® 500 | 0,02 | 0,02 | 0,02 | 0,02 | 0,02 | 0,02 | 0,02 | 0,02 |
| Prämix-Lösung FeSO₄ | 0,024 | 0,023 | 0,045 | 0,0315 | 0,035 | 0,0249 | 0,0156 | 0,0135 |
| Diethylhydroxylamin | 0,2 | 0,2 | 0,2 | 0,2 | 0,2 | 0,2 | 0,2 | 0,2 |
| Vulkanox® BKF | 0,1 | 0,1 | 0,1 | 0,1 | 0,1 | 0,1 | 0,1 | 0,1 |

| **Polymerisationsbedingungen** | | | | | | | | |
|---|---|---|---|---|---|---|---|---|
| Polymerisationstemperatur [°C] | 12 | 12 | 12 | 12 | 12 | 12 | 12 | 12 |
| Polymerisationsumsatz [%] | 75,3 | 73,4 | 78,7 | 75,4 | 72,9 | 73,1 | 73,5 | 75 |
| Polymerisationszeit [h] | 6,13 | 7 | 7,5 | 7,5 | 6,33 | 4,13 | 6 | 4,5 |

**Tabelle 2: Zugabe der Inkremente der Nitril-Dien-Carbonsäureester-Copolymere (NBR 1 -8)**

| | | | | | | | | |
|---|---|---|---|---|---|---|---|---|
| Die Zugabe der Inkremente der Monomere erfolgte bei den angegebenen Monomerumsätzen ± 5%. | | | | | | | | |

| **NBR** | **1** | **2** | **3*** | **4*** | **5*** | **6*** | **7*** | **8*** |
|---|---|---|---|---|---|---|---|---|
| Umsatz | ACN (a) / BD (b) / Termonomer (c) / BA (c) | | | | | | | |
| [%] | [Gew.-%] | | | | | | | |
| 21 | 3/7/-/- | -/-/-/- | -/-/-/- | 2/4/-/- | 2/5/2,8/1,2 | 3/6/-/- | 3/5/-/- | 3/6/-/- |
| 33 | -/-/-/- | 3/-/-/- | 3/-/16/- | -/-/-/- | 2/5/2,8/1,2 | -/-/-/- | -/-/-/- | -/-/-/- |
| 42 | 3/7/-/- | -/-/-/- | -/-/-/- | 2/4/-/- | 2/5/2,8/1,2 | 3/6/-/- | 3/4/-/- | 3/5/-/- |
| 63 | 3/6/-/- | -/-/-/- | -/-/-/- | 2/3/-/- | 2/3/2,8/1,2 | 3/5/-/- | 3/4/-/- | 3/5/-/- |

Die Herstellung der Nitril-Dien-Carbonsäureester-Copolymere erfolgte diskontinuierlich in einem 20 L- Autoklaven (NBR 1 und NBR 3) oder 5 L- Autoklaven (NBR 2, NBR 4, NBR 5, NBR 6, NBR 7 und NBR 8) mit Rührwerk. Bei den Autoklavenansätzen wurden jeweils 5,3 kg (NBR1) oder 5,2 kg (NBR3) oder 1,3 kg (NBR 2, NBR 4, NBR 6, NBR 7 und NBR 8) oder 1,25 kg (NBR 5) der Monomermischung und eine Gesamtwassermenge von 9,2 kg (NBR 1) oder 7,6 kg (NBR 3) oder 2,5 kg (NBR 2, NBR 4) oder 2,1 kg (NBR 6, NBR 7 und NBR 8) oder 1,94 kg (NBR 5) sowie EDTA in einer äquimolaren Menge bezogen auf das Fe-II verwendet. Von dieser Wassermenge wurden 7,2 kg (NBR 1) oder 7,06 kg (NBR 3) oder 2,25 kg (NBR 2, NBR 4) oder 1,85 kg (NBR 6 und NBR 7) oder 1,81 kg (NBR 8) oder 1,75 kg (NBR 5) mit dem Emulgator im Autoklaven vorgelegt und mit einem Stickstoffstrom gespült. Danach wurden die initialen Monomere und die in Tabelle 1 angegebene Menge des Molekulargewichtsreglers t-DDM zugegeben, und der Reaktor verschlossen. Nach der Thermostatisierung des Reaktorinhalts wurden die Polymerisationen durch die Zugabe der Prämix-Lösungen und von Pinanhydroperoxid (Glidox® 500) gestartet.

Der Polymerisationsverlauf wurde durch gravimetrische Umsatzbestimmungen verfolgt. Bei Erreichen der in Tabelle 1 angegebenen Umsätze wurde die Polymerisation durch Zugabe einer wässrigen Lösung von Diethylhydroxylamin abgestoppt. Nicht umgesetzte Monomere und sonstige flüchtige Bestandteile wurden mittels Wasserdampfdestillation entfernt.

Vor der Koagulation des jeweiligen NBR-Latex wurde dieser jeweils mit einer 45%igen Dispersion von Vulkanox® BKF (0,1 Gew. % Vulkanox® BKF bezogen auf NBR-Feststoff) versetzt. Anschließend wurde mit CaCl₂ koaguliert, gewaschen und die erhaltenen Krümel getrocknet.

Die getrockneten NBR-Kautschuke wurden durch die Mooney-Viskosität, den ACN-Gehalt und die Glasübergangstemperatur charakterisiert und der Gehalt der Termonomere durch ¹H-NMR-Analyse bestimmt (Tabelle 3).

**Tabelle 3: Zusammensetzung der unhydrierten Nitril-Dien-Carbonsäureester-Copolymere NBR 1-8 (einpolymerisierte Monomermengen in Gew.-%; erfindungsgemäße Beispiele mit einem Stern * gekennzeichnet)**

| **NBR** | | **1** | **2** | **3*** | **4*** | **5*** | **6*** | **7*** | **8*** |
|---|---|---|---|---|---|---|---|---|---|
| **ACN (a)** | [Gew.-%] | 16,4 | 19,7 | 13,3 | 14,8 | 10 | 12,9 | 14 | 15,5 |
| **BD (b)** | [Gew.-%] | 48,8 | 52,7 | 41 | 38,6 | 41,5 | 43,1 | 45,5 | 47,2 |
| **BA (c)** | [Gew.-%] | 34,8 | | | | 14,3 | 21,2 | 11,1 | 17 |
| **MEA (c)** | [Gew.-%] | | 27,6 | | | | | | |
| **PEG-2-MA (d)** | [Gew.-%] | | | | 46,6 | | | | |
| **PEG-3-MA (d)** | [Gew.-%] | | | 45,7 | | 34,2 | 22,8 | 29,4 | 20,3 |
| **Mooney Viskosität ML(1+4@100° C)** | ME | 33 | 23 | 23 | 25 | 16 | 32 | 29 | 46 |

### II Herstellung der hydrierten Nitril-Dien-Carbonsäureester-Copolymere (HNBR 1 bis 8)

### Durchführung der Hydrierungen

Die folgenden Hydrierungen wurden unter Verwendung der zuvor synthetisierten unhydrierten Nitril-Dien-Carbonsäureester-Copolymere (NBR 1 bis 8) durchgeführt.

Trockenes Monochlorbenzol (MCB) wurde von VWR, Wilkinson-Katalysator von der Firma Materia Inc. und Triphenylphosphin von VWR bezogen und wie erhalten eingesetzt. Die Ergebnisse der Hydrierversuche sind in Tabelle 4 zusammengefasst.

Die Hydrierungen 1 - 8 wurden in einem 10 L Hochdruck-Reaktor unter den folgenden Bedingungen durchgeführt:

| | |
|---|---|
| Lösungsmittel: | Monochlorbenzol |
| Feststoffkonzentration: | 12 - 13 Gew.-% -NBR-Terpolymer in MCB (518 g) |
| Reaktortemperatur: | 137 - 140 °C |
| Reaktionszeit: | bis zu 4 Stunden |
| Katalysator & -ladung: | Wilkinson Katalysator: 0,337 g (0,065 phr); |
| | Co-Katalysator: Triphenylphosphin: 5,18 g (1,0 phr) |
| Wasserstoffdruck (p H₂): | 8,4 MPa |
| Rührerdrehzahl: | 600 rpm |

Die NBR enthaltende Polymerlösung wird dreimal mit H₂ (23 °C, 2 MPa) unter kräftigem Rühren entgast. Die Temperatur des Reaktors wurde auf 100 °C und der H₂-Druck auf 6 MPa angehoben. 123,9 g einer chlorbenzolischen Lösung bestehend aus Wilkinson Katalysator (0,337 g) und Triphenylphosphin (5,18 g) wurden zugeben und der Druck auf 8,4 MPa angehoben, während die Reaktortemperatur auf 137 - 140 °C eingestellt wurde. Beide Parameter wurden während der Reaktion konstant gehalten. Der Reaktionsverlauf wurde mittels Messung des Restdoppelbindungsgehaltes (RDB) des unhydrierten Nitril-Dien-Carbonsäureester-Copolymers mittels IR-Spektroskopie verfolgt. Die Reaktion wurde nach höchstens 4 Stunden und/oder Erreichen eines RDB-Gehaltes von <1% durch Ablassen des Wasserstoffdrucks beendet.

Das so entstandene hydrierte Nitril-Dien-Carbonsäureester-Copolymer wurde mittels Dampf-Koagulation aus der Lösung isoliert. Dazu wurde die chlorbenzolische Lösung auf einen Polymergehalt von 7 Gew.-% verdünnt und kontinuierlich in einen gerührten, mit Wasser gefüllten und auf 100 °C vorgeheizten Glasreaktor dosiert. Gleichzeitig wurde mit 0,5 bar Dampf in das Koagulationswasser eingeleitet. Die so ausgefällten Polymerkrümel wurden grob entwässert und anschließend bei 55 °C unter Vakuum bis zur Gewichtskonstanz getrocknet.

**Tabelle 4: Zusammensetzung und Eigenschaften der hydrierten Nitril-Dien-Carbonsäureester-Copolymere (HNBR 1 bis 8) (erfindungsgemäße Beispiele sind mit einem Stern * gekennzeichnet)**

| **HNBR** | | **1** | **2** | **3*** | **4*** | **5*** | **6*** | **7*** | **8*** |
|---|---|---|---|---|---|---|---|---|---|
| **ACN (a)** | [Gew.-%] | 16,4 | 19,7 | 13,3 | 14,8 | 10 | 12,9 | 14 | 15,5 |
| **BD (b)** | [Gew.-%] | 48,8 | 52,7 | 41 | 38,6 | 41,5 | 43,1 | 45,5 | 47,2 |
| **BA (c)** | [Gew.-%] | 34,8 | | | | 14,3 | 21,2 | 11,1 | 17 |
| **(MEA (c)** | [Gew.-%] | | 27,6 | | | | | | |
| **PEG-2-MA (d)** | [Gew.-%] | | | | 46,6 | | | | |
| **PEG-3-MA (d)** | [Gew.-%] | | | 45,7 | | 34,2 | 22,8 | 29,4 | 20,3 |
| **RDB-Gehalt** | [%] | <0,9 | <0,5 | 9 | 0,8 | <0,5 | <0,5 | <0,5 | 0,8 |
| **Mooney Viskosität ML(1+4@100°C)** | ME | 70 | 22 | 37 | 127 | 48 | 71 | 68 | 91 |
| **Glasübergangst emp. (Tg) Rohpolymer** | [°C] | -39 | -36 | -45 | -47 | -49 | -47 | -45 | -43 |

Die erfindungsgemäßen hydrierten Nitril-Dien-Carbonsäureester-Copolymere zeichnen sich durch eine Glasübergangstemperatur Tg von -40 °C oder weniger aus.

### III Herstellung von Vulkanisaten der hydrierten Nitril-Dien-Carbonsäureester-Copolymere (HNBR V1 bis V8):

### Herstellung der vulkanisierbaren Mischungen:

Alle Kautschukmischungen wurden auf einem Mischwalzwerk hergestellt. Der Durchmesser der Walzen war 80 mm, die Länge 200 mm. Die Walzen wurden auf 40°C vorgewärmt, die Geschwindigkeit der vorderen Walze war 16,5 RPM, die der hinteren Walze 20 PRM, wodurch eine Friktion von 1:1,2 erreicht wurde.

Der Kautschuk wurde vorgelegt und eine (1) Minute gemischt, bis sich ein glattes Walzfell gebildet hat. Nachfolgend wurde zuerst der Ruß, dann die Additive und zuletzt die Vernetzungschemikalien eingemischt. Insgesamt betrug die Mischzeit 5 bis 8 Minuten.

**Tabelle 5: Zusammensetzung und Eigenschaften des Vulkanisats (HNBR V1 bis V8; erfindungsgemäße Beispiele sind mit einem Stern * gekennzeichnet).**

| **Beispiel** | **V1** | **V2** | **V3*** | **V4*** | **V5*** | **V6*** | **V7*** | **V8*** |
|---|---|---|---|---|---|---|---|---|
| **HNBR-Copolymer-Zusammensetzung** | **Gew.-%** | **Gew.-%** | **Gew.-%** | **Gew.-%** | **Gew.-%** | **Gew.-%** | **Gew.-%** | **Gew.-%** |
| ACN (a) | 16,4 | 19,7 | 13,3 | 14,8 | 10 | 12,9 | 14 | 15,5 |
| BD (b) | 48,8 | 52,7 | 41 | 38,6 | 41,5 | 43,1 | 45,5 | 47,2 |
| BA (c) | 34,8 | | | | 14,3 | 21,2 | 11,1 | 17 |
| MEA (c) | | 27,6 | | | | | | |
| PEG-2-MA (d) | | | | 46,6 | | | | |
| PEG-3-MA (d) | | | 45,7 | | 34,2 | 22,8 | 29,4 | 20,3 |

| **HNBR-Copolymer** | **Teile** | **Teile** | **Teile** | **Teile** | **Teile** | **Teile** | **Teile** | **Teile** |
|---|---|---|---|---|---|---|---|---|
| HNBR 1 | 100 | | | | | | | |
| HNBR 2 | | 100 | | | | | | |
| HNBR 3* | | | 100 | | | | | |
| HNBR 4* | | | | 100 | | | | |
| HNBR 5* | | | | | 100 | | | |
| HNBR 6* | | | | | | 100 | | |
| HNBR 7* | | | | | | | 100 | |
| HNBR 8* | | | | | | | | 100 |

| **Andere Komponenten** | **phr** | **phr** | **phr** | **phr** | **phr** | **phr** | **phr** | **phr** |
|---|---|---|---|---|---|---|---|---|
| N330 | 30 | 30 | 30 | 30 | 30 | 30 | 30 | 30 |
| Rhenofit DDA 70 | 1,4 | 1,4 | 1,4 | 1,4 | 1,4 | 1,4 | 1,4 | 1,4 |
| Vulkanox® ZMB2 | 0,4 | 0,4 | 0,4 | 0,4 | 0,4 | 0,4 | 0,4 | 0,4 |
| Maglite® DE | 2 | 2 | 2 | 2 | 2 | 2 | 2 | 2 |
| TAIC | 1,5 | 1,5 | 1,5 | 1,5 | 1,5 | 1,5 | 1,5 | 1,5 |
| PERKADOX® 14-40 | 7 | 7 | 7 | 7 | 7 | 7 | 7 | 7 |

| **Vulkanisat-Eigenschaften** | | | | | | | | |
|---|---|---|---|---|---|---|---|---|
| Glasübergangstemp. (Tg) | -40 | -37 | -47 | -47 | -49 | -47 | -45 | -44 |
| Quellung in IRM 903 | 51 | 27 | 39 | 42 | 50 | 51 | 31 | 43 |

Das Terpolymer des Vergleichsversuches V1 enthält mehr als 25 Gew.-% α,β-ethylenisch ungesättigten Carbonsäureestereinheiten aber **keine PEG-Acrylateinheiten.** Mengen von mehr als 25 Gew.-% **Butylacrylat** reichen alleine nicht aus um im Vulkanisat eine Glasübergangstemperatur von weniger als -40 °C zu erreichen.

Das Terpolymer des Vergleichsversuches V2 enthält mehr als 25 Gew.-% α,β-ethylenisch ungesättigten Carbonsäureestereinheiten, nämlich Methoxyethylacrylat (PEG-1 Acrylat), aber **keine PEG-Acrylateinheiten** mit Ethylenglycol-Wiederholungseinheiten von n>1. Mengen von mehr als 25 Gew.-% **PEG-1 Acrylat** reichen alleine nicht aus um im Vulkanisat eine Glasübergangstemperatur von weniger als -40 °C zu erreichen.

Die erfindungsgemäßen Vulkanisate 3 bis 8 enthalten HNBR-Copolymer mit mindestens **15 Gew.-% PEG-Acrylateinheiten (d)** und mindestens zwei Ethylenglycol-Wiederholungseinheiten.

Die erfindungsgemäßen Terpolymere der Versuche V3 und V4 enthalten jeweils mehr als 25 Gew.-% PEG-2-MA und PEG-3-MA. Die Vulkanisate zeichnen sich durch eine niedrige Glasübergangstemperatur und eine geringe Quellung in IRM 903 aus.

Die erfindungsgemäßen Quartärpolymere der Versuche V5 bis V8 enthalten sowohl PEG-3-MA als auch Butylacrylat wobei die Menge an PEG-3-MA jeweils größer als 15 Gew.-% ist und die Gesamtmenge an Carbonsäureestereinheiten mehr als 25 Gew.-% beträgt. Die Vulkanisate zeichnen sich durch eine niedrige Glasübergangstemperatur und eine geringe Quellung in IRM 903 aus.

Mit zunehmender Menge an **Acrylnitrileinheiten (a)** verschlechtert sich die Glasübergangstemperatur. Bei einem Acrylnitrilgehalt von mehr als 20 Gew.-% ist die Glasübergangstemperatur des Vulkanisats nicht mehr akzeptabel.

Mit abnehmender Menge an **PEG-Acrylateinheiten (d)** verschlechtert sich die Quellung. Bei einem PEG-Acrylatgehalt von weniger als 15 Gew.-% ist die Quellung des Vulkanisats in IRM 903 nicht mehr akzeptabel.

Die erfindungsgemäßen Vulkanisate, die Ter- und Quartärpolymere mit PEG-2-MA Wiederholungseinheiten aufweisen, zeichnen sich darüber hinaus auch noch dadurch aus, dass diese ganz besonders wenig Gehalt an Gel aufweisen.

Der Vorteil der Erfindung liegt insbesondere darin, dass Vulkanisate auf Basis der erfindungsgemäßen hydrierte Nitril-Dien-Carbonsäureester-Copolymere
- eine Glasübergangstemperatur von **weniger als -40 °C** und
- eine Quellung in IRM 903 von **51 % oder weniger** aufweisen.

In der Kombination dieser Eigenschaften sind die erfindungsgemäßen hydrierten Nitril-Dien-Carbonsäureester-Copolymere bislang kommerziell verfügbaren hydrierten Nitril-Dien-Carbonsäureester-Copolymeren überlegen.

## Patentansprüche

1. Hydrierte Nitril-Dien-Carbonsäureester-Copolymere, enthaltend
(a) 0,1 bis 20 Gew.-% zumindest einer α,β-ethylenisch ungesättigten Nitrileinheit,
(b) 15 bis 74,9 Gew.-% zumindest einer konjugierten Dieneinheit und
(c) 25 bis 65 Gew.-% zumindest einer α,β-ethylenisch ungesättigten Carbonsäureestereinheit,
wobei zumindest 15 Gew.-%, bevorzugt zumindest 20 Gew.-% der α,β-ethylenisch ungesättigten Carbonsäureestereinheiten (c) bezogen auf die Gesamtmenge aller Monomereinheiten von 100 Gew.-%, von einem PEG-Acrylat (d) der allgemeinen Formel (I) 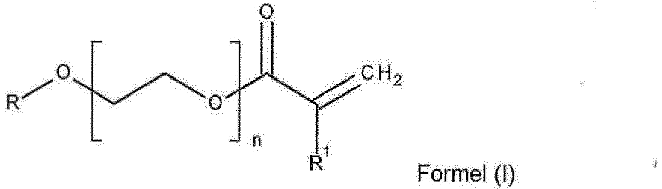 abgeleitet sind, wobei
R gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
n gleich 2 bis 12, bevorzugt 2 bis 8, besonders bevorzugt 2 bis 5 und ganz besonders bevorzugt 2 oder 3 ist und
R¹ gleich Wasserstoff oder CH₃- ist.

2. Hydrierte Nitril-Dien-Carbonsäureester-Copolymere nach Anspruch 1, enthaltend
(a) 1 bis 19 Gew.-% zumindest einer α,β-ethylenisch ungesättigten Nitrileinheit,
(b) 21 bis 73 Gew.-% zumindest einer konjugierten Dieneinheit und
(c) 26 bis 60 Gew.-% zumindest einer α,β-ethylenisch ungesättigten Carbonsäureestereinheit,
wobei zumindest 15 Gew.-%, bevorzugt zumindest 20 Gew.-% der α,β-ethylenisch ungesättigten Carbonsäureestereinheiten (c) bezogen auf die Gesamtmenge aller Monomereinheiten von 100 Gew.-%, von einem PEG-Acrylat (d) der allgemeinen Formel (I) 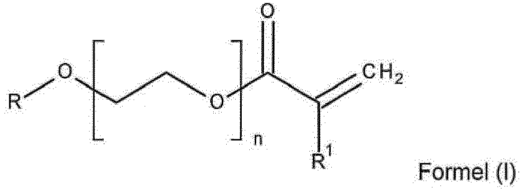 abgeleitet sind, wobei
R gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
n gleich 2 bis 12, bevorzugt 2 bis 8, besonders bevorzugt 2 bis 5 und ganz besonders bevorzugt 2 oder 3 ist und
R¹ gleich Wasserstoff oder CH₃- ist.

3. Hydrierte Nitril-Dien-Carbonsäureester-Copolymere nach Anspruch 1 oder 2, enthaltend
(a) 8 bis 18 Gew.-% zumindest einer α,β-ethylenisch ungesättigten Nitrileinheit,
(b) 27 bis 65 Gew.-% zumindest einer konjugierten Dieneinheit und
(c) 27 bis 55 Gew.-% zumindest einer α,β-ethylenisch ungesättigten Carbonsäureestereinheit,
wobei zumindest 15 Gew,-%, bevorzugt zumindest 20 Gew.-% der α,β-ethylenisch ungesättigten Carbonsäureestereinheiten (c) bezogen auf die Gesamtmenge aller Monomereinheiten von 100 Gew.-%, von einem PEG-Acrylat (d) der allgemeinen Formel (I) 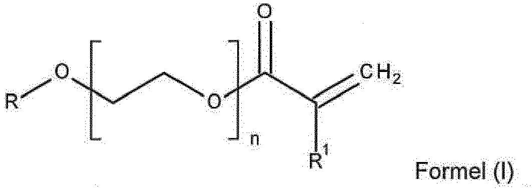 abgeleitet sind, wobei
R gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
n gleich 2 bis 12, bevorzugt 2 bis 8, besonders bevorzugt 2 bis 5 und ganz besonders bevorzugt 2 oder 3 ist und
R¹ gleich Wasserstoff oder CH₃- ist.

4. Hydrierte Nitril-Dien-Carbonsäureester-Copolymere nach einem der Ansprüche 1 bis 3, **dadurch gekennzeichnet, dass** die konjugierten Dieneinheiten (b) zu 50 % bis 100 %, bevorzugt zu 90 % bis 100 %, besonders bevorzugt zu 99 % bis 100 % und ganz besonders bevorzugt zu 99 % bis 100 % hydriert sind.

5. Hydrierte Nitril-Dien-Carbonsäureester-Copolymere nach einem der Ansprüche 1 bis 4, **dadurch gekennzeichnet, dass** die α,β-ethylenisch ungesättigten Nitrileinheiten (a) Acrylnitril, Methacrylnitril, Ethacrylnitril oder Mischungen davon, bevorzugt Acrylnitril sind.

6. Hydrierte Nitril-Dien-Carbonsäureester-Copolymere nach einem der Ansprüche 1 bis 5, **dadurch gekennzeichnet, dass** die konjugierten Dieneinheiten (b) 1,3-Butadien, Isopren, 2,3-Dimethylbutadien, 1,3-Pentadiene (Piperylen) oder Mischungen davon, bevorzugt 1,3-Butadien sind.

7. Hydrierte Nitril-Dien-Carbonsäureester-Copolymere nach einem der Ansprüche 1 bis 6, **dadurch gekennzeichnet, dass** die PEG-Acrylateinheiten (c) Ethoxy-, Butoxy- oder Ethylhexyloxypolyethylenglycol(meth)acrylat mit 2 bis 12 Ethylenglycol-Wiederholungseinheiten sind.

8. Hydrierte Nitril-Dien-Carbonsäureester-Copolymere nach einem der Ansprüche 1 bis 7, **dadurch gekennzeichnet, dass** die PEG-Acrylateinheiten (c) Ethoxy- oder Butoxy Polyethylenglycol(meth)acrylat mit 2 bis 5 Ethylenglycol-Wiederholungseinheiten sind.

9. Hydrierte Nitril-Dien-Carbonsäureester-Copolymere nach einem der Ansprüche 1 bis 8, **dadurch gekennzeichnet, dass** die PEG-Acrylateinheiten (c) Ethoxy- oder Butoxypolyethylenglycol(meth)acrylat mit 2 oder 3 Ethylenglycol-Wiederholungseinheiten sind.

10. Hydrierte Nitril-Dien-Carbonsäureester-Copolymere nach einem der Ansprüche 1 bis 9, **dadurch gekennzeichnet, dass** n gleich 2 oder 3, R gleich Ethyl oder Butyl und R¹ gleich Wasserstoff oder Methyl.

11. Hydrierte Nitril-Dien-Carbonsäureester-Copolymere nach einem der Ansprüche 1 bis 10, **dadurch gekennzeichnet, dass** n gleich 2, R gleich Butyl und R¹ gleich Methyl ist.

12. Hydrierte Nitril-Dien-Carbonsäureester-Copolymere nach einem der Ansprüche 1 bis 11, **dadurch gekennzeichnet dass** es sich um Copolymere enthaltend 8 bis 18 Gew.-% Acrylnitrileinheiten, 27 bis 65 Gew.-% 1,3-Butadieneinheiten und 27 bis 55 Gew.-% PEG-2-Acrylateinheiten oder PEG-3-Acrylateinheiten handelt.

13. Verfahren zur Herstellung hydrierter Nitril-Dien-Carbonsäureester-Copolymere nach einem der Ansprüche 1 bis 12, **dadurch gekennzeichnet, dass** mindestens ein α,β-ethylenisch ungesättigtes Nitril, mindestens ein konjugiertes Dien und mindestens ein α,β-ethylenisch ungesättigter Carbonsäureester einer Emulsionspolymerisation unterworfen und anschließend hydriert werden.

14. Verfahren zur Herstellung hydrierter Nitril-Dien-Carbonsäureester-Copolymere nach Anspruch 13, **dadurch gekennzeichnet, dass** mindestens ein α,β-ethylenisch ungesättigtes Nitril, mindestens ein konjugiertes Dien und mindestens ein PEG-Acrylat der allgemeinen Formel (I) einer Emulsionspolymerisation unterworfen werden.

15. Vulkanisierbare Mischungen enthaltend hydrierte Nitril-Dien-Carbonsäureester-Copolymere nach einem der Ansprüche 1 bis 12 und mindestens einen Vernetzer.

16. Verfahren zur Herstellung von vulkanisierbaren Mischungen gemäß Anspruch 15, durch Mischen eines hydrierten Nitril-Dien-Carbonsäureester-Copolymers nach einem der Ansprüche 1 bis 6 mit mindestens einem Vernetzer.

17. Verfahren zur Herstellung von Vulkanisaten, bevorzugt als Formteilen, basierend auf hydrierten Nitril-Dien-Carbonsäureester-Copolymeren, **dadurch gekennzeichnet, dass** man die vulkanisierbare Mischung gemäß Anspruch 15, hergestellt nach einem Verfahren gemäß Anspruch 16, einer Vulkanisation unterwirft, bevorzugt in einem Formgebungsverfahren bei Temperaturen im Bereich von 100 °C bis 250 °C.

18. Verfahren zur Herstellung von Vulkanisaten, bevorzugt als Formteilen, basierend auf hydrierten Nitril-Dien-Carbonsäureester-Copolymeren, **dadurch gekennzeichnet, dass** man die vulkanisierbare Mischung gemäß Anspruch 15, hergestellt nach einem Verfahren gemäß Anspruch 16, einer Vulkanisation unterwirft, bevorzugt in einem Formgebungsverfahren bei Temperaturen im Bereich von 120 °C bis 250 °C.

19. Verfahren zur Herstellung von Vulkanisaten, bevorzugt als Formteilen, basierend auf hydrierten Nitril-Dien-Carbonsäureester-Copölymeren, **dadurch gekennzeichnet, dass** man die vulkanisierbare Mischung gemäß Anspruch 15, hergestellt nach einem Verfahren gemäß Anspruch 16, einer Vulkanisation unterwirft, bevorzugt in einem Formgebungsverfahren bei Temperaturen im Bereich von 130 °C bis 250 °C.

20. Vulkanisate basierend auf hydrierten Nitril-Dien-Carbonsäureester-Copolymeren nach einem der Ansprüche 1 bis 12, erhältlich gemäß dem Verfahren nach Anspruch 17 bis 19.

21. Vulkanisate nach Anspruch 20, **dadurch gekennzeichnet, dass** es sich um Formteile handelt die bevorzugt ausgewählt sind aus Riemen, Dichtungen, Walzen, Schuhkomponenten, Schläuchen, Dämpfungselementen, Statoren und Kabelmänteln, besonders bevorzugt Riemen und Dichtungen.

22. Verwendung des hydrierten Nitril-Dien-Carbonsäureester-Copolymers nach einem der Ansprüche 1 bis 12 zur Herstellung von Formteilen, bevorzugt zur Herstellung von Formteilen ausgewählt aus Gruppe bestehend aus Riemen, Dichtungen, Walzen, Schuhkomponenten, Schläuchen, Dämpfungselementen, Statoren und Kabelmänteln, besonders bevorzugt zur Herstellung von Riemen und Dichtungen.

## Claims

1. Hydrogenated nitrile-diene-carboxylic ester copolymers containing
(a) 0.1% to 20% by weight of at least one α,β-ethylenically unsaturated nitrile unit,
(b) 15% to 74.9% by weight of at least one conjugated diene unit and
(c) 25% to 65% by weight of at least one α,β-ethylenically unsaturated carboxylic ester unit,
wherein at least 15% by weight, preferably at least 20% by weight, of the α,β-ethylenically unsaturated carboxylic ester units (c) based on the total amount of all monomer units of 100% by weight are derived from a PEG acrylate (d) of general formula (I) 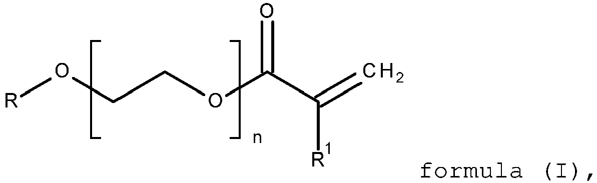 wherein
R is branched or unbranched C₁-C₂₀-alkyl, preferably C₂-C₂₀-alkyl, particularly preferably ethyl, butyl or ethylhexyl,
n is 2 to 12, preferably 2 to 8, particularly preferably 2 to 5 and very particularly preferably 2 or 3 and
R¹ is hydrogen or CH₃-.

2. Hydrogenated nitrile-diene-carboxylic ester copolymers according to Claim 1, containing
(a) 1% to 19% by weight of at least one α,β-ethylenically unsaturated nitrile unit,
(b) 21% to 73% by weight of at least one conjugated diene unit and
(c) 26% to 60% by weight of at least one α,β-ethylenically unsaturated carboxylic ester unit,
wherein at least 15% by weight, preferably at least 20% by weight, of the α,β-ethylenically unsaturated carboxylic ester units (c) based on the total amount of all monomer units of 100% by weight are derived from a PEG acrylate (d) of general formula (I) 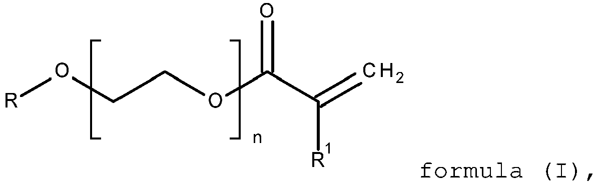 wherein
R is branched or unbranched C₁-C₂₀-alkyl, preferably C₂-C₂₀-alkyl, particularly preferably ethyl, butyl or ethylhexyl,
n is 2 to 12, preferably 2 to 8, particularly preferably 2 to 5 and very particularly preferably 2 or 3 and
R¹ is hydrogen or CH₃-.

3. Hydrogenated nitrile-diene-carboxylic ester copolymers according to Claim 1 or 2, containing
(a) 8% to 18% by weight of at least one α,β-ethylenically unsaturated nitrile unit,
(b) 27% to 65% by weight of at least one conjugated diene unit and
(c) 27% to 55% by weight of at least one α,β-ethylenically unsaturated carboxylic ester unit,
wherein at least 15% by weight, preferably at least 20% by weight, of the α,β-ethylenically unsaturated carboxylic ester units (c) based on the total amount of all monomer units of 100% by weight are derived from a PEG acrylate (d) of general formula (I) 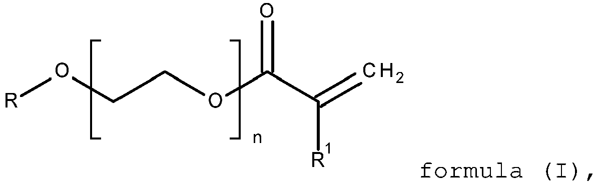 wherein
R is branched or unbranched C₁-C₂₀-alkyl, preferably C₂-C₂₀-alkyl, particularly preferably ethyl, butyl or ethylhexyl,
n is 2 to 12, preferably 2 to 8, particularly preferably 2 to 5 and very particularly preferably 2 or 3 and
R¹ is hydrogen or CH₃-.

4. Hydrogenated nitrile-diene-carboxylic ester copolymers according to any of Claims 1 to 3, **characterized in that** the conjugated diene units (b) are hydrogenated to an extent of 50% to 100%, preferably to an extent of 90% to 100%, particularly preferably to an extent of 99% to 100% and very particularly preferably to an extent of 99% to 100%.

5. Hydrogenated nitrile-diene-carboxylic ester copolymers according to any of Claims 1 to 4, **characterized in that** the α,β-ethylenically unsaturated nitrile units (a) are acrylonitrile, methacrylonitrile, ethacrylonitrile or mixtures thereof, preferably acrylonitrile.

6. Hydrogenated nitrile-diene-carboxylic ester copolymers according to any of Claims 1 to 5, **characterized in that** the conjugated diene units (b) are 1,3-butadiene, isoprene, 2,3-dimethylbutadiene, 1,3-pentadiene (piperylene) or mixtures thereof, preferably 1,3-butadiene.

7. Hydrogenated nitrile-diene-carboxylic ester copolymers according to any of Claims 1 to 6, **characterized in that** the PEG acrylate units (c) are ethoxy, butoxy or ethylhexyloxy polyethylene glycol (meth)acrylate comprising 2 to 12 ethylene glycol repeating units.

8. Hydrogenated nitrile-diene-carboxylic ester copolymers according to any of Claims 1 to 7, **characterized in that** the PEG acrylate units (c) are ethoxy or butoxy polyethylene glycol (meth)acrylate comprising 2 to 5 ethylene glycol repeating units.

9. Hydrogenated nitrile-diene-carboxylic ester copolymers according to any of Claims 1 to 8, **characterized in that** the PEG acrylate units (c) are ethoxy or butoxy polyethylene glycol (meth)acrylate comprising 2 or 3 ethylene glycol repeating units.

10. Hydrogenated nitrile-diene-carboxylic ester copolymers according to any of Claims 1 to 9, **characterized in that** n is 2 or 3, R is ethyl or butyl and R¹ is hydrogen or methyl.

11. Hydrogenated nitrile-diene-carboxylic ester copolymers according to any of Claims 1 to 10, **characterized in that** n is 2, R is butyl and R¹ is methyl.

12. Hydrogenated nitrile-diene-carboxylic ester copolymers according to any of Claims 1 to 11, **characterized in that** copolymers containing 8% to 18% by weight of acrylonitrile units, 27% to 65% by weight of 1,3-butadiene units and 27% to 55% by weight of PEG-2 acrylate units or PEG-3 acrylate units are concerned.

13. Process for producing hydrogenated nitrile-diene-carboxylic ester copolymers according to any of Claims 1 to 12, **characterized in that** at least one α,β-ethylenically unsaturated nitrile, at least one conjugated diene and at least one α,β-ethylenically unsaturated carboxylic ester are subjected to an emulsion polymerization and subsequently hydrogenated.

14. Process for producing hydrogenated nitrile-diene-carboxylic ester copolymers according to Claim 13, **characterized in that** at least one α,β-ethylenically unsaturated nitrile, at least one conjugated diene and at least one PEG acrylate of general formula (I) are subjected to an emulsion polymerization.

15. Vulcanizable mixtures containing hydrogenated nitrile-diene-carboxylic ester copolymers according to any of Claims 1 to 12 and at least one crosslinker.

16. Process for producing vulcanizable mixtures according to Claim 15 by mixing a hydrogenated nitrile-diene-carboxylic ester copolymer according to any of Claims 1 to 6 with at least one crosslinker.

17. Process for producing vulcanizates, preferably as mouldings, based on hydrogenated nitrile-diene-carboxylic ester copolymers, **characterized in that** it comprises subjecting the vulcanizable mixture according to Claim 15, produced by a process according to Claim 16, to a vulcanization, preferably in a moulding process at temperatures in the range from 100°C to 250°C.

18. Process for producing vulcanizates, preferably as mouldings, based on hydrogenated nitrile-diene-carboxylic ester copolymers, **characterized in that** it comprises subjecting the vulcanizable mixture according to Claim 15, produced by a process according to Claim 16, to a vulcanization, preferably in a moulding process at temperatures in the range from 120°C to 250°C.

19. Process for producing vulcanizates, preferably as mouldings, based on hydrogenated nitrile-diene-carboxylic ester copolymers, **characterized in that** it comprises subjecting the vulcanizable mixture according to Claim 15, produced by a process according to Claim 16, to a vulcanization, preferably in a moulding process at temperatures in the range from 130°C to 250°C.

20. Vulcanizates based on hydrogenated nitrile-diene-carboxylic ester copolymers according to any of Claims 1 to 12, obtainable by the process according to Claim 17 to 19.

21. Vulcanizates according to Claim 20, **characterized in that** mouldings are concerned which are preferably selected from belts, seals, rollers, shoe components, hoses, damping elements, stators and cable sheaths, particularly preferably belts and seals.

22. Use of the hydrogenated nitrile-diene-carboxylic ester copolymer according to any of Claims 1 to 12 for producing mouldings, preferably for producing mouldings selected from the group consisting of belts, seals, rollers, shoe components, hoses, damping elements, stators and cable sheaths, particularly preferably for producing belts and seals.

## Revendications

1. Copolymères hydrogénés nitrile-diène-ester d'acide carboxylique, contenant
(a) 0,1 à 20 % en poids d'au moins un motif de type nitrile éthyléniquement α,β-insaturé,
(b) 15 à 74,9 % en poids d'au moins un motif de type diène conjugué et
(c) 25 à 65 % en poids d'au moins un motif de type ester d'acide carboxylique éthyléniquement α,β-insaturé,
au moins 15 % en poids, préférablement au moins 20 % en poids des motifs de type ester d'acide carboxylique éthyléniquement α,β-insaturé (c), par rapport à la quantité totale de tous les motifs monomériques de 100 % en poids, étant dérivés d'un acrylate de PEG (d) de formule générale (I) 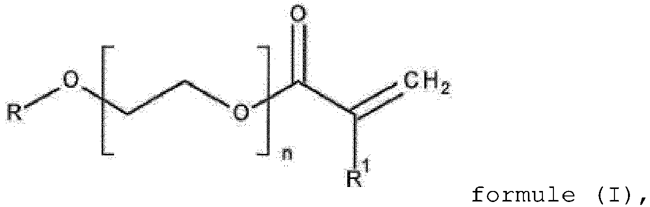
R étant égal à un C₁₋₂₀-alkyle ramifié ou non ramifié, préférablement C₂₋₂₀-alkyle, particulièrement préférablement éthyle, butyle ou éthylhexyle,
n valant 2 à 12, préférablement 2 à 8, particulièrement préférablement 2 à 5 et tout particulièrement préférablement 2 ou 3 et
R¹ étant égal à hydrogène ou CH₃-.

2. Copolymères hydrogénés nitrile-diène-ester d'acide carboxylique selon la revendication 1, contenant
(a) 1 à 19 % en poids d'au moins un motif de type nitrile éthyléniquement α,β-insaturé,
(b) 21 à 73 % en poids d'au moins un motif de type diène conjugué et
(c) 26 à 60 % en poids d'au moins un motif de type ester d'acide carboxylique éthyléniquement α,β-insaturé,
au moins 15 % en poids, préférablement au moins 20 % en poids des motifs de type ester d'acide carboxylique éthyléniquement α,β-insaturé (c), par rapport à la quantité totale de tous les motifs monomériques de 100 % en poids, étant dérivés d'un acrylate de PEG (d) de formule générale (I) 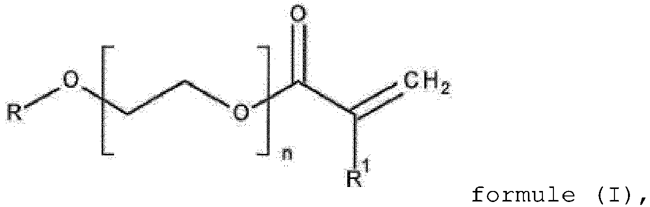
R étant égal à un C₁₋₂₀-alkyle ramifié ou non ramifié, préférablement C₂₋₂₀-alkyle, particulièrement préférablement éthyle, butyle ou éthylhexyle,
n valant 2 à 12, préférablement 2 à 8, particulièrement préférablement 2 à 5 et tout particulièrement préférablement 2 ou 3 et
R¹ étant égal à hydrogène ou CH₃-.

3. Copolymères hydrogénés nitrile-diène-ester d'acide carboxylique selon la revendication 1 ou 2, contenant
(a) 8 à 18 % en poids d'au moins un motif de type nitrile éthyléniquement α,β-insaturé,
(b) 27 à 65 % en poids d'au moins un motif de type diène conjugué et
(c) 27 à 55 % en poids d'au moins un motif de type ester d'acide carboxylique éthyléniquement α,β-insaturé,
au moins 15 % en poids, préférablement au moins 20 % en poids des motifs de type ester d'acide carboxylique éthyléniquement α,β-insaturé (c), par rapport à la quantité totale de tous les motifs monomériques de 100 % en poids, étant dérivés d'un acrylate de PEG (d) de formule générale (I) 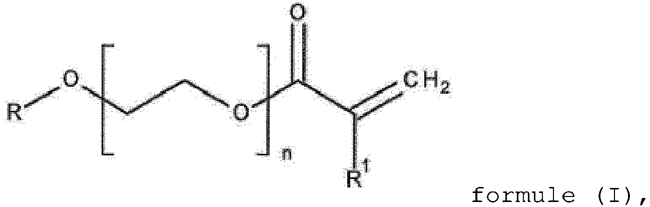
R étant égal à un C₁₋₂₀-alkyle ramifié ou non ramifié, préférablement C₂₋₂₀-alkyle, particulièrement préférablement éthyle, butyle ou éthylhexyle,
n valant 2 à 12, préférablement 2 à 8, particulièrement préférablement 2 à 5 et tout particulièrement préférablement 2 ou 3 et
R¹ étant égal à hydrogène ou CH₃-.

4. Copolymères hydrogénés nitrile-diène-ester d'acide carboxylique selon l'une quelconque des revendications 1 à 3, **caractérisés en ce que** les motifs de type diène conjugué (b) sont hydrogénés à raison de 50 % à 100 %, préférablement de 90 % à 100 %, particulièrement préférablement de 99 % à 100 % et tout particulièrement préférablement de 99 % à 100 %.

5. Copolymères hydrogénés nitrile-diène-ester d'acide carboxylique selon l'une quelconque des revendications 1 à 4, **caractérisés en ce que** les motifs de type nitrile éthyléniquement α,β-insaturé (a) sont l'acrylonitrile, le méthacrylonitrile, l'éthacrylonitrile ou des mélanges correspondants, préférablement l'acrylonitrile.

6. Copolymères hydrogénés nitrile-diène-ester d'acide carboxylique selon l'une quelconque des revendications 1 à 5, **caractérisés en ce que** les motifs de type diène conjugué (b) sont le 1,3-butadiène, l'isoprène, le 2,3-diméthylbutadiène, le 1,3-pentadiène (pipérylène) ou des mélanges correspondants, préférablement le 1,3-butadiène.

7. Copolymères hydrogénés nitrile-diène-ester d'acide carboxylique selon l'une quelconque des revendications 1 à 6, **caractérisés en ce que** les motifs de type acrylate de PEG (c) sont un (méth)acrylate d'éthoxypolyéthylèneglycol, de butoxypolyéthylèneglycol ou d'éthylhexyloxypolyéthylèneglycol comportant 2 à 12 motifs répétitifs éthylèneglycol.

8. Copolymères hydrogénés nitrile-diène-ester d'acide carboxylique selon l'une quelconque des revendications 1 à 7, **caractérisés en ce que** les motifs de type acrylate de PEG (c) sont un (méth)acrylate d'éthoxypolyéthylèneglycol ou de butoxypolyéthylèneglycol comportant 2 à 5 motifs répétitifs éthylèneglycol.

9. Copolymères hydrogénés nitrile-diène-ester d'acide carboxylique selon l'une quelconque des revendications 1 à 8, **caractérisés en ce que** les motifs de type acrylate de PEG (c) sont un (méth)acrylate d'éthoxypolyéthylèneglycol ou de butoxypolyéthylèneglycol comportant 2 ou 3 motifs répétitifs éthylèneglycol.

10. Copolymères hydrogénés nitrile-diène-ester d'acide carboxylique selon l'une quelconque des revendications 1 à 9, **caractérisés en ce que** n est égal à 2 ou 3, R est égal à éthyle ou à butyle et R¹ est égal à hydrogène ou méthyle.

11. Copolymères hydrogénés nitrile-diène-ester d'acide carboxylique selon l'une quelconque des revendications 1 à 10, **caractérisés en ce que** n est égal à 2, R est égal à butyle et R¹ est égal à méthyle.

12. Copolymères hydrogénés nitrile-diène-ester d'acide carboxylique selon l'une quelconque des revendications 1 à 11, **caractérisés en ce que** ce sont des copolymères contenant 8 à 18 % en poids de motifs de type acrylonitrile, 27 à 65 % en poids de motifs de type 1,3-butadiène et 27 à 55 % en poids de motifs de type acrylate de PEG-2 ou de motifs de type acrylate de PEG-3.

13. Procédé pour la préparation de copolymères hydrogénés nitrile-diène-ester d'acide carboxylique selon l'une quelconque des revendications 1 à 12, **caractérisé en ce qu'**au moins un nitrile éthyléniquement α,β-insaturé, au moins un diène conjugué et au moins un ester d'acide carboxylique éthyléniquement α,β-insaturé sont soumis à une polymérisation en émulsion et sont ensuite hydrogénés.

14. Procédé pour la préparation de copolymères hydrogénés nitrile-diène-ester d'acide carboxylique selon la revendication 13, **caractérisé en ce qu'**au moins un nitrile éthyléniquement α,β-insaturé, au moins un diène conjugué et au moins un acrylate de PEG de formule générale (I) sont soumis à une polymérisation en émulsion.

15. Mélanges vulcanisables contenant des copolymères hydrogénés nitrile-diène-ester d'acide carboxylique selon l'une quelconque des revendications 1 à 12 et au moins un agent de réticulation.

16. Procédé pour la préparation de mélanges vulcanisables selon la revendication 15, par le mélange d'un copolymère hydrogéné nitrile-diène-ester d'acide carboxylique selon l'une quelconque des revendications 1 à 6 avec au moins un agent de réticulation.

17. Procédé pour la préparation de vulcanisats, préférablement en tant que pièces moulées, à base de copolymères hydrogénés nitrile-diène-ester d'acide carboxylique, **caractérisé en ce qu'**on soumet le mélange vulcanisable selon la revendication 15, préparé par un procédé selon la revendication 16, à une vulcanisation, préférablement dans un procédé de façonnage à des températures dans la plage de 100 °C à 250 °C.

18. Procédé pour la préparation de vulcanisats, préférablement en tant que pièces moulées, à base de copolymères hydrogénés nitrile-diène-ester d'acide carboxylique, **caractérisé en ce qu'**on soumet le mélange vulcanisable selon la revendication 15, préparé par un procédé selon la revendication 16, à une vulcanisation, préférablement dans un procédé de façonnage à des températures dans la plage de 120 °C à 250 °C.

19. Procédé pour la préparation de vulcanisats, préférablement en tant que pièces moulées, à base de copolymères hydrogénés nitrile-diène-ester d'acide carboxylique, **caractérisé en ce qu'**on soumet le mélange vulcanisable selon la revendication 15, préparé par un procédé selon la revendication 16, à une vulcanisation, préférablement dans un procédé de façonnage à des températures dans la plage de 130 °C à 250 °C.

20. Vulcanisats à base de copolymères hydrogénés nitrile-diène-ester d'acide carboxylique selon l'une quelconque des revendications 1 à 12, pouvant être obtenus par un procédé selon les revendications 17 à 19.

21. Vulcanisats selon la revendication 20, **caractérisés en ce que** ce sont des pièces moulées qui sont préférablement choisies parmi des courroies, des joints, des cylindres, des composants de chaussures, des tuyaux, des éléments d'amortissement, des stators et des gaines de câble, particulièrement préférablement des courroies et des joints.

22. Utilisation du copolymère hydrogéné nitrile-diène-ester d'acide carboxylique selon l'une quelconque des revendication 1 à 12 pour la préparation de pièces moulées, préférablement pour la préparation de pièces moulées choisies dans le groupe constitué par des courroies, des joints, des cylindres, des composants de chaussures, des tuyaux, des éléments d'amortissement, des stators et des gaines de câble, particulièrement préférablement des courroies et des joints.
